# EUROPEAN PATENT APPLICATION

(11) **EP 1 674 136 A1**
(43) Date of publication of application: **28.06.2006**
(21) Application number: 04762049.7
(22) Date of filing: 06.08.2004
(51) Int. Cl.: A63B 69/16

(54) **MULTIFUNCTIONAL EXERCISE BICYCLE**

(30) Priority: 08.08.2003 CN 03273232; 08.08.2003 CN 03140109; 29.12.2003 CN 200310125474; 29.12.2003 CN 200320132169; 20.07.2004 CN 200420071711; 20.07.2004 CN 200410028153
(71) Applicant: Meng, Jie, Luohu District, ShenZhen, Guangdong 518005 (CN)
(72) Inventor: Meng, Jie, Luohu District, ShenZhen, Guangdong 518005 (CN)
(74) Representative: Polte, Willi
(86) International application number: PCT/CN2004/000913
(87) International publication number: WO 2005/037382

(57) **Abstract**

The present invention relates to a multi-functional fitness bicycle, comprising front and rear wheels, a saddle, a frame and hand-and-foot drive system; the hand-and-foot drive system includes at least one pedal, and a foot drive chainwheel, the foot drive chainwheel being coupled with the pedal via a pedal crank; the hand-and-foot drive system further comprises a front wheel drive system including a hand drive gear, which is driven by a rocker arm integrated with a front fork; the front driving rocker arm is pivoted to the front driving axle seat and drives the front wheel; **characterized in that** the bicycle further comprises an inertial energy storage wheel for adjusting resistance automatically and a variable-resistance control system, which automatically adjusts kinetic resistance of the inertial energy storage wheel when the bicycle is driven. The multi-functional fitness bicycle of the present invention can be ridden at a small space, and the exerciser can perform exercises smoothly when he/she selects bigger kinetic resistance.

## Description

### Technical field

The present invention relates to a fitness equipment, and more particularly to an improvement of a fitness equipment having a shape of and in a motion mode of a bicycle. The fitness equipment can also be used as a bicycle.

### Background art

Bicycle is a good device for keeping fit. Though there are some similar fitness equipment in the existing fitness equipment, such as a riding device and a fitness car, they are not very satisfactory in terms of fun and effects resulted from exercising. The applicant has invented a bionic bicycle (Chinese Patent application No.921120990) driven coordinately by hands and feet respectively in parallel. It has many advantages in fitness, but the driving force provided by its pedaling mode is not balanced enough and it can maintain continuous movement only at a high speed, thus it is not suitable for performing a slow movement in a small space (such as a basketball court and many other gyms) and for performing exercises in a stationary condition.

This invention intends to design a bionic bicycle-type fitness equipment that is entertaining and multi-functional and capable of performing effective exercises in a narrow space and in a stationary condition.

### Summary of the invention

The object of the invention is to provide a multi-functional fitness bicycle capable of being fixed to a position and suitable for performing a slow-speed movement in a small space by adopting structures such as an inertial energy storage wheel, an eccentric chainwheel, an eccentric wheel and the like that can adjust resistance automatically.

The technical solutions of the invention are as below:

A multi-functional fitness bicycle, comprising front and rear wheels, a saddle, a frame and hand-and-foot drive system; the hand-and-foot drive system includes at least one pedal, and a foot drive chainwheel, the foot drive chainwheel being coupled with the pedal via a pedal crank; the hand-and-foot drive system further comprises a front wheel drive system including a hand drive gear, which is driven by a rocker arm integrated with a front fork; the front driving rocker arm is pivoted to the front driving axle seat and drives the front wheel;
characterized in that the bicycle further comprises an inertial energy storage wheel for adjusting resistance automatically and a variable-resistance control system, which automatically adjusts kinetic resistance of the inertial energy storage wheel when the bicycle is driven.

The bicycle according to the present inventon, wherein the variable-resistance control system includes at least one centrifugal fly block arranged along the periphery of the inertial energy storage wheel and a damping belt around the inertial energy storage wheel and the centrifugal fly block; one end of the centrifugal fly block is pivoted to the inertial energy storage wheel, and the other end thereof is elastically supported, the ends of the centrifugal fly block extend to push the damping belt when the speed of the inertial energy storage wheel reaches a predetermined value, increasing resistance between the inertial energy storage wheel and the damping belt.

The bicycle according to the present inventon, wherein the variable-resistance control system includes at least one T-shape fly block arranged along the periphery of the inertial energy storage wheel and a damping belt around the inertial energy storage wheel and the T-shape fly block; the T-shape fly block is placed in a groove formed in the periphery of the inertial energy storage wheel, the lower end of the T-shape fly block being placed in a radial hole of the groove and an elastic member being provided at the bottom thereof; a blocking member for preventing the T-shape fly block from falling off is arranged along the outer edge of the inertial energy storage wheel.

The bicycle according to the present inventon, wherein the variable-resistance control system includes an eccentric wheel and an elliptical wheel that are coupled with the foot drive chainwheel, and a pull/push rod arranged on the frame, a magnetic damping plate being provided at the bottom of the pull/push rod and a roller being provided at the top thereof, which is in tangent contact with the eccentric wheel and the elliptical wheel; when the distal ends of the eccentric wheel and the elliptical wheel are in contact with the roller, the damping plate produces a maximum resistance to the inertial energy storage wheel.

The bicycle according to the present inventon, wherein the variable-resistance control system further includes an eccentric wheel and an elliptical wheel that are coupled with the foot drive chainwheel, and a damping belt around the inertial energy storage wheel; a pull rod is arranged at the end of the damping belt, the eccentric wheel and the elliptical wheel push the pull rod to move the damping belt, generating a variable resistance to the inertial energy storage wheel.

The bicycle according to the present inventon, wherein the variable-resistance control system further includes a driven chainwheel coupled with a driving chainwheel on the the foot drive middle axle, and an eccentric wheel coupled with the driven chainwheel; a derailleur is arranged between the driven chainwheel and the eccentric wheel, enabling the eccentric wheel to rotate at the same angular speed as that of the driven chainwheel, or enabling the eccentric wheel to rotate at an angular speed twice of that of the driven chainwheel.

The bicycle according to the present inventon, wherein the variable-resistance control system includes a resistance adjusting wheel coupled with the foot drive chainwheel, and a damping belt around the inertial energy storage wheel having its one end fixed to periphery of the driven wheel via a draw wire; the periphery of the resistance adjusting wheel is arranged with a plurality of regulating holes at different distances from the center of the circle thereof, the draw wire being fixed to the regulating holes by a locking member.

The bicycle according to the present inventon, wherein the variable-resistance control system further includes a driven chainwheel coupled with a driving chainwheel on the the foot drive middle axle, and a resistance adjusting wheel linked to the driven chainwheel; a derailleur is arranged between the driven chainwheel and the resistance adjusting wheel, the derailleur enabling the resistance adjusting wheel to rotate at the same angular speed as that of the driven chainwheel, or enabling the resistance adjusting wheel to rotate at an angular speed twice of that of the driven chainwheel.

The bicycle according to the present inventon, wherein the inertial energy storage wheel is arranged at an axle of the rear wheel and is or is not coaxial with the real wheel, or the inertial energy storage wheel is arranged at the foot drive middle axle with its rotating center coinciding with the axis of the foot drive middle axle.

The bicycle according to the present inventon, wherein the inertial energy storage wheel for adjusting resistance automatically can be applicable to stationary fitness equipment such as a fitness car and the like.

The bicycle according to the present inventon, wherein an elliptical chainwheel and an eccentric chainwheel are arranged on the foot drive middle axle, and the long axis of the elliptical chainwheel and the radial central line of the engaged pedal crank forms an angle of about 90°; and a straight line connecting the geometrical center of the eccentric chainwheel and the center of the foot drive middle axle on the plane of the chainwheel and the radial central line of the engaged pedal crank forms an angle of about 90°.

The bicycle according to the present inventon, wherein a pedaling shifting structure is arranged on the foot drive middle axle for shifting between a parallel pedaling and an alternate pedaling, the pedaling shifting structure includes an inner racket sleeve fixed to one side of the foot drive middle axle and an outer racket sleeve fixed to the pedal crank, a notched portion is arranged on at least one side of the radial outer periphery of the inner racket sleeve, the ends of the notched portion are arranged as engaging shoulders, and at least one engaging arm is arranged on the outer racket sleeve on the same side; the engaging arm is engaged to the engaging shoulder so as to engage the inner racket sleeve with the outer racket sleeve to rotate together.

The bicycle according to the present inventon, wherein the notched portion is arranged on each of the symmetrical two sides on the radial outer periphery of the inner ratchet sleeve, the two ends of each of the notched portion are arranged as engaging shoulders, and two engaging arms are arranged correspondingly, the two engaging arms are engaged to the engaging shoulders on the two sides of the notched portion respectively/simultaneously.

The bicycle according to the present inventon, wherein a engaging push wheel is arranged for engaging with the engaging arms, the engaging push wheel being arranged in the outer ratchet sleeve, the lower side of the engaging push wheel forming an arcurate pushing surface in equal radius, a first pushing surface being formed extending from two sides of the arcurate pushing surface in an upside down "□" shape and enabling the engaging arm to push the engaging shoulder, and a second pushing surface being formed above the first pushing surface and being capable of pushing the engaging arm away from the engaging shoulder.

The bicycle according to the present inventon, wherein an elastic member is arranged on the outer sleeve of the pedaling shifting structure for pushing the engaging arm toward the engaging push wheel.

The bicycle according to the present inventon, wherein a pedaling shifting structure is arranged on the foot drive middle axle of the bicycle for shifting between a parallel pedaling and an alternate pedaling, the pedaling shifting structure includes an inner sleeve fixed to the foot drive middle axle and an outer sleeve fixed to the pedal crank, two notches are arranged symmetrically in the outer sleeve, and correspondingly, a tongue is arranged on the inner sleeve, when the pedal crank and the outer sleeve connected thereto are driven to rotate, the tongue is engaged to the notches to rotate the inner sleeve, the middle axle, the outer sleeve and the crank synchronously, and fix the left and right pedals in parallel or alternately at 180°.

The bicycle according to the present inventon, wherein out of the two symmetrical notches in the outer sleeve, a plurality of notches are arranged on the two sides of the notch that can fix the left and right pedals in parallel, such that the pedal cranks can be set nearly in parallel by means of these notches.

The bicycle according to the present inventon, wherein a fixing hole is arranged in the pedal crank, which is fixed to the foot drive chainwheel via a bolt and the hole.

The bicycle according to the present inventon, wherein a pedal upper sleeve can rotate around a pedal shaft; and a threaded rod is arranged under the pedal upper sleeve, the threaded rod is screwed into a pedal sleeve at the lower portion of the pedal and adjusts and fixes the distance between the pedal and the pedal upper sleeve by a bolt hole in the pedal sleeve.

The bicycle according to the present inventon, wherein a sleeve extension portion that can be mounted removably is arranged on the pedal upper sleeve, the sleeve extension portion is above the pedal.

The bicycle according to the present inventon, wherein the bicycle further comprises a special shoe including a shoe face and a shoe bottom, the shoe face being provided with a concave engaged with the extension portion of the pedal upper sleeve for limiting the extension portion from moving forward and backward.

The bicycle according to the present inventon, wherein the concave is arranged on an independent block, a releasable fastening structure is arranged at the bottom of the independent block, and a corresponding releasable fastening structure is arranged on the shoe face.

The bicycle according to the present inventon, wherein the releasable fastening structure is comprised of press buttons.

The bicycle according to the present inventon, wherein a fixing string is arranged on the independent block, and at least two fixing hooks are arranged on the shoe face, the independent block is fixed onto the shoe face by pulling the fixing string through the fixing hooks.

The bicycle according to the present inventon, wherein a groove or a pushing surface is arranged in the threaded rod, holes are arranged in the pedal sleeve, and a engaging member can extends into the groove or pushing surface to prevent the pedal from rotating around the threaded rod.

The bicycle according to the present inventon, wherein the engaging member is an eccentric wheel connected to a handle, the rotating shaft of the eccentric wheel is fixed with the pedal sleeve.

The bicycle according to the present inventon, wherein the pedal comprises a hooking pin pivoted to the pedal shaft, at least one connecting bar is fixed to the two symmetrically arranged pedal blocks at the inner side of the hooking pin, the portion of the hooking pin other than the inner side thereof where the hooking pin connects with the connecting bar does not include any other connecting members and is spaced apart from any other members.

The bicycle according to the present inventon, wherein the pedal can be matched with a shoe bottom, the shoe bottom contains a connecting member having a hooking pin hole engaged with the hooking pin member, the connecting member is pivoted or fixed to the shoe bottom, and a limiting structure for limiting the rotating and swinging angle of the pivoted connecting member.

The bicycle according to the present inventon, wherein the connecting member is arranged in a concave in the shoe bottom, and the height of the connecting member does not exceed beyond the plane of the shoe bottom.

The bicycle according to the present inventon, wherein an elastic member is arranged in the hooking pin hole of the connecting member to enable the hooking pin hole to forcibly hold the hooking pin.

The bicycle according to the present inventon, wherein at least one surface of the hooking pin is aligned with the stepping surface of the two pedal blocks.

The bicycle according to the present inventon, wherein the bicycle further comprises a front damping system, the front damping system is arranged between the front wheel axle and the frame and includes an upper pivot tube and a lower pivot tube, the upper pivot tube is pivoted with the end of the lower pivot tube, a hand drive chainwheel is arranged coaxially on the pivot axle; meanwhile, a spring lever is arranged between the upper pivot tube and the lower pivot tube.

The bicycle according to the present inventon, wherein the frame is provided with at least one fixing hole for adjusting the height of the foot drive middle axle, and a first regulating rod having its lower end hinged to the foot drive middle axle seat, a plurality of first regulating holes matched with the fixing hole are arranged on the first regulating rod for fixing and adjusting the height of the foot drive middle axle seat.

The bicycle according to the present inventon, wherein the foot drive middle axle seat is further coupled with a second regulating rod having its one end fixed to the foot drive middle axle seat and the other end pivoted to the front or rear end of the frame.

The bicycle according to the present inventon, wherein two first regulating rods may be hinged to the foot drive middle axle seat, a plurality of first regulating holes are arranged in the other end of each first regulating rod, and a plurality of fixing holes are arranged in the frame, the first regulating holes are fixed respectively to the fixing holes for fixing and adjusting the height of the foot drive middle axle seat.

The bicycle according to the present inventon, wherein a first engaging tube is arranged under the frame central upright tube, a second engaging tube is arranged on the foot drive middle axle seat, which can be inserted into the first engaging tube and can move upward and downward to be locked at different heights of the first engaging tube.

The bicycle according to the present inventon, wherein a hand drive rocker arm provided with a hand drive chainwheel is pivoted to the front driving axle seat on the front fork, and front and rear brake devices are arranged on the front drive axle seat, the brake handles thereof exceed beyond the hand drive chainwheel for the convenience of being held.

The bicycle according to the present inventon, wherein the front drive axle seat is coupled with the upper end of the front fork via a regulating mechanism, the regulating mechanism includes an inner sleeve and an outer sleeve, regulating holes are arranged in the outer sleeve, and a locking groove is arranged in the inner sleeve, the engaged depth of the inner sleeve and outer sleeve is adjusted and fixed by a bolt.

The bicycle according to the present inventon, wherein the front drive axle seat is fixed to the outer sleeve, the inner sleeve is positioned above the front fork and is screwed into the outer sleeve.

The bicycle according to the present inventon, wherein a slide-proof groove and a slide-proof plate are arranged on the inner sleeve, the slide-proof plate has its one end pivoted to the outer sleeve and the other end formed with fixing holes and can be fixed to the outer sleeve, the edge of the slide-proof plate passes through an opening on the outer sleeve, the slide-proof plate can be imbedded into the slide-proof groove to avoid relative slide between the front drive axle seat and the front fork; a small hole for assembly and disassembly is formed adjacent to the outer side of the slide-proof plate.

The bicycle according to the present inventon, wherein a variable-speed control device is arranged in front of the front drive axle seat, the variable-speed control device comprises a first control handle for shifting positions by hooking with fingers and a second control handle for shifting positions by pushing with fingers' back, the length and shape of the first and second control handles shall be configured such that they can move around the front drive chainwheel for the convenience of hooking and pushing with fingers, the whole variable-speed control device is integrated with the brake handles.

The bicycle according to the present inventon, wherein the front and rear brake device further comprises brake handles arranged on the drive handle on the front drive rocker arm, one end of the brake handle is fixed to the drive handle, and its central portion can be pressed on the driving disc coaxially coupled with the shaft of the drive handle, a first reset elastic member is arranged on the side of the driving disc, a draw wire is connected to a driven disc in the middle of the hand drive rocker arms, a second reset elastic member is arranged on the side of the driven disc, the driven disc is displaced via the draw wire; the middle of a forcipate brake arm is pivoted to the front drive axle seat, the forcipate brake arm is comprised of an outer push arm and an inner pull arm, the outer push arm and the inner pull arm are arranged across the driven disc, the periphery of the driven disc may contact with the outer push arm of the forcipate brake arm, the inner pull arm is brought to rotate by pushing the outer push arm so as to move the brake wire connected with the inner pull arm.

The bicycle according to the present inventon, wherein a linkage brake device is arranged on the front drive axle seat, a protrusion is arranged on the brake handle of the linkage brake device, the protrusion can be pressed on the inner pull arm of the forcipate brake arm to rotate the forcipate brake arm.

The bicycle according to the present inventon, wherein the shafts of the hand drive handles can be coupled with the front drive rocker arms via adjustable tubes fixed thereto, the adjustable tubes can be shifted between two angular positions differing 180° along the circumferential direction and are fastened to the ends of the front drive rocker arms, and allows the shafts of the hand drive handles to be in parallel, a locking hole and a locking member may be arranged on the adjustable tube.

The bicycle according to the present inventon, wherein two rows of longitudinally distributed locking holes are formed symmetrically at 180° on the adjustable tube, each of the locking holes can be engaged with the clip pin on the hand drive rocker arm, a push elastic member is arranged inside the clip pin, at least two locking holes that are symmetrically distributed at 180° may be arranged on the adjustable tube.

The bicycle according to the present inventon, wherein the front wheel driving system further comprises an axle transmission structure including a transmission axle arranged inside the sleeve between the hand drive gear and the front wheel axle, the two ends of the transmission axle are provided with a first and a second conical gears, the first conical gear is engaged with a third conical gear arranged on the hand drive rocker arm axle, the third conical gear can integrated with the hand drive gear, the second conical gear is engaged with a fourth conical gear on the front wheel axle, the transmission axle may includes an upper axle tube and a lower axle tube that are axially engaged by insertation and can only move relatively along the axial direction.

The bicycle according to the present inventon, wherein the third conical gear, the first conical gear and the upper axle tube of the transmission axle can be pivoted respectively to the fixing seat of the front drive axle and an adjusting and connecting sleeve fixed to the fixing seat of the front drive axle, the fixing seat of the front drive axle and the adjusting and connecting sleeve can bring the first and third conical gears and the upper axle tube of the transmission axle to move up and down within a certain height, the adjusting and connecting sleeve can be locked to positions at different heights above the sleeve between the hand drive gear and the front wheel axle.

The bicycle according to the present inventon, wherein the axle transmission structure for the front wheel drive can be arranged independently on the side of the existing front wheel damping system.

The bicycle according to the present inventon, wherein the axle transmission structure and the damping structure can be arranged as a combined structure, the combined structure is configured such that the transmission axle also includes an upper axle tube and a lower axle tube, the upper axle tube and the lower axle tube are engaged axially by insertation and can only move relatively along the axial direction, the sleeve between the hand drive rocker arm axle and the front wheel axle includes an upper outer sleeve and a lower outer sleeve, the upper axle tube of the transmission axle is pivoted to the upper outer sleeve between the hand drive rocker arm axle and the front wheel axle, the lower axle tube of the transmission axle is pivoted to the lower outer sleeve between the hand drive rocker arm axle and the front wheel axle, and an elastic member like a damping spring is arranged within each of the upper axle tube and the lower axle tube of the transmission axle and the upper outer sleeve and the lower outer sleeve between the hand drive rocker arm axle and the front wheel axle.

The bicycle according to the present inventon, wherein a piston is arranged under the upper axle tube of the transmission axle, and a piston tube or a hydraulic cylinder is arranged in the lower axle tube of the transmission axle.

The bicycle according to the present inventon, wherein the combined structure may be configured such that the damping structure is merely arranged in the sleeve on one side, and an axle transmission structure is arranged in the sleeve on the other side instead of the damping structure.

The bicycle according to the present inventon, wherein the bicycle is placed on a stationary frame, the frame comprises a bottom frame, a transmission member linking the front and rear wheels, a rear wheel support portion for supporting and fixing the rear wheel axle of the bicycle, and at least a first and a second transmission wheels that contact respectively with the front and rear wheels, the pivots of the first and second transmission wheels are fixed to the bottom frame and are coupled with the transmission member.

The bicycle according to the present inventon, wherein the distance between the first and second transmission wheels can be adjusted, the adjusting structure includes a front and a rear sleeves that are engaged by insertation, and securing members on the sleeves for fixing the front and rear sleeves.

The bicycle according to the present inventon, wherein the bicycle may be placed on a stationaryframe, the frame comprises a bottom board, a transmission structure moving around the bottom board, a front wheel limiting bracket for limiting the rotating and swinging of the front wheel of the bicycle, and a rear wheel support bracket for fixing the rear wheel axle of the bicycle, the transmission structure is contacted with and linked to the front and rear wheels.

The bicycle according to the present inventon, wherein the front wheel limiting bracket and the rear wheel support bracket can be conveniently folded and removed, the transmission structure moving around the bottom board can be a transmission belt that allows the exerciser to run on it, the stationary frame further comprises handrails for doing running exercises.

The bicycle according to the present inventon, wherein a flywheel installation section having a little diameter is arranged on the extension of the front wheel hub, a front wheel flywheel with small amount of teeth is fixed onto the flywheel installation section, a concave is formed on the front wheel flywheel in its axial cross-section, the teeth of the flywheel are arranged in the concave, a engaging structure and slide accessories of the flywheel are arranged on the side of the concave.

The bicycle according to the present inventon, wherein the inner sleeve of the flywheel is integrated with the front wheel hub.

The bicycle according to the present inventon, wherein the saddle comprises a frame inside and a soft material on its surface, the rear main part of the frame is higher than the front protruded part of the frame.

The bicycle according to the present inventon, wherein the saddle comprises a frame inside and a soft material on its surface, the frame of the saddle is divided into two parts that are pivoted via a pivot.

Due to the adoption of the inertial energy storage wheel that can automatically adjust resistance in the present invention, the multi-functional fitness bicycle of the present invention can store large amount of kinetic energy even at a low speed, and the kinetic resistance can be increased automatically and proportionally in accordance with the driving force so that the exerciser can still perform exercises smoothly when he/she selects bigger kinetic resistance.

According to another aspect of the present invention, by adopting a front damping system imbedded with a front drive axle, the shock of the front wheel can be well absorbed when a hand drive device is adopted on the bicycle so that the bicycle is more flexible to pass through a road and is more comfortable for riding.

### Brief description of accompanying drawings

Figs. 1A and 1B are left and right side schematical views illustrating a multi-functional fitness bicycle in accordance with the present invention;
Figs. 2A and 2B are schematical views illustrating the structure of a variable-resistance control system of an inertial energy storage wheel of the multi-functional fitness bicycle from different angles of view in accordance with the present invention;
Figs. 2C and 2D are schematical views illustrating the structure of another embodiment of the variable-resistance control system of the inertial energy storage wheel of the multi-functional fitness bicycle from different angles of view in accordance with the present invention;
Figs. 3A and 3B are schematical views illustrating the structure of the inertial energy storage wheel of the multi-functional fitness bicycle in different assembly forms in accordance with the present invention;
Figs. 4A and 4B are schematical views illustrating the structure of the third embodiment of the variable-resistance control system of the inertial energy storage wheel of the multi-functional fitness bicycle from different angles of view in accordance with the present invention;
Figs. 5A and 5B are schematical views illustrating the structure of the fourth embodiment of the variable-resistance control system of the inertial energy storage wheel of the multi-functional fitness bicycle from different angles of view in accordance with the present invention;
Figs. 6A and 6B are schematical views illustrating the structure of the fifth embodiment of the variable-resistance control system of the inertial energy storage wheel of the multi-functional fitness bicycle from different angles of view in accordance with the present invention;
Figs. 7A to 7C are schematical views illustrating different assembly structures of the middle axle chainwheel of the multi-functional fitness bicycle for adjusting resistance in accordance with the present invention;
Figs. 8A to 8C are views illustrating respectively the different states of a pedaling shifting structure in accordance with the present invention and the cross-sectional view therof;
Figs. 8D to 8E are views illustrating the rear side of the pedaling shifting structure shown in Figs. 8A to 8C after a chainwheel is assembled in accordance with the present invention and the cross-sectional view therof;
Fig. 8F is an amplifying view illustrating a pushing surface in the pedaling shifting structure shown in Figs. 8A to 8E in accordance with the present invention;
Figs. 8G to 8H are schematical views illustrating an inner ratchet sleeve of a foot drive middle axle in the pedaling shifting structure shown in Figs. 8A to 8F from different angles of view in accordance with the present invention;
Figs. 9A to 9D are views illustrating respectively the pedal crank of the pedaling shifting structure in the second embodiment and its cross-sectional view, and a schematical view showing the assembly of an foot drive chainwheel in accordance with the present invention;
Fig. 9E to 9G are schematical views illustrating the arrangement of the notches in the embodiments shown in Figs. 9A to 9D in accordance with the present invention;
Figs. 10A and 10B are cross-sectional views illustrating the pedal of the multi-functional fitness bicycle in accordance with the present invention;
Figs. 10C to 10G are schematical views illustrating the components of the pedal adjusting structure of the multi-functional fitness bicycle in accordance with the present invention;
Figs. 11A to 11C are schematical views illustrating the pedal of the multi-functional fitness bicycle in the second embodiment from different angles of view in accordance with the present invention;
Figs. 12A and 12B are schematical views illustrating shoes adapted to the pedal shown in Figs. 11A to 11C from different angles of view in accordance with the present invention;
Figs. 13A to 13F are schematical views illustrating different surfaces of the shoes adopted in the multi-functional fitness bicycle in accordance with the present invention;
Figs. 14A and 14B are schematical views illustrating two embodiments having a front damping system and a hand front drive system of the multi-functional fitness bicycle in accordance with the present invention;
Figs. 15A to 15D are schematical views illustrating different embodiments of adjusting the height of the foot drive middle axle of the multi-functional fitness bicycle in accordance with the present invention;
Figs. 16A and 16B are cross-sectional schematical views illustrating the first embodiment of the front damping system of the multi-functional fitness bicycle in accordance with the present invention, wherein Fig. 16B is a partial amplifying view of Fig. 16A;
Figs. 16C and 16D are cross-sectional schematical views illustrating the second embodiment of the front damping system of the multi-functional fitness bicycle in accordance with the present invention, wherein Fig. 16D is a partial amplifying view of Fig. 16C;
Figs. 17A to 17C are schematical views illustrating other embodiments of the front damping system and the driving system of the multi-functional fitness bicycle in accordance with the present invention;
Figs. 18A to 18D are schematical views illustrating assembly structure of the front drive gear of the multi-functional fitness bicycle and positions of the front drive gear and the brake handle in accordance with the present invention;
Figs. 19A and 19B are schematical views illustrating structure of the brake control transmission of the multi-functional fitness bicycle in accordance with the present invention;
Figs. 20A to 20D are schematical views illustrating an adjusting structure on the front fork upright tube of the multi-functional fitness bicycle in accordance with the present invention;
Figs. 21A to 21C are schematical views illustrating embodiments of the multi-functional fitness bicycle in different fixing modes in accordance with the present invention;
Figs. 22A and 22B are cross-sectional schematical views illustrating different embodiments of the small flywheel on the front wheel axle of the multi-functional fitness bicycle in accordance with the present invention; and
Figs. 23A to 23F are schematical views illustrating improvement of the saddle of the multi-functional fitness bicycle in different embodiments in accordance with the present invention.

### Mode of carrying out the invention

Preferred embodiments will be described in detail below.

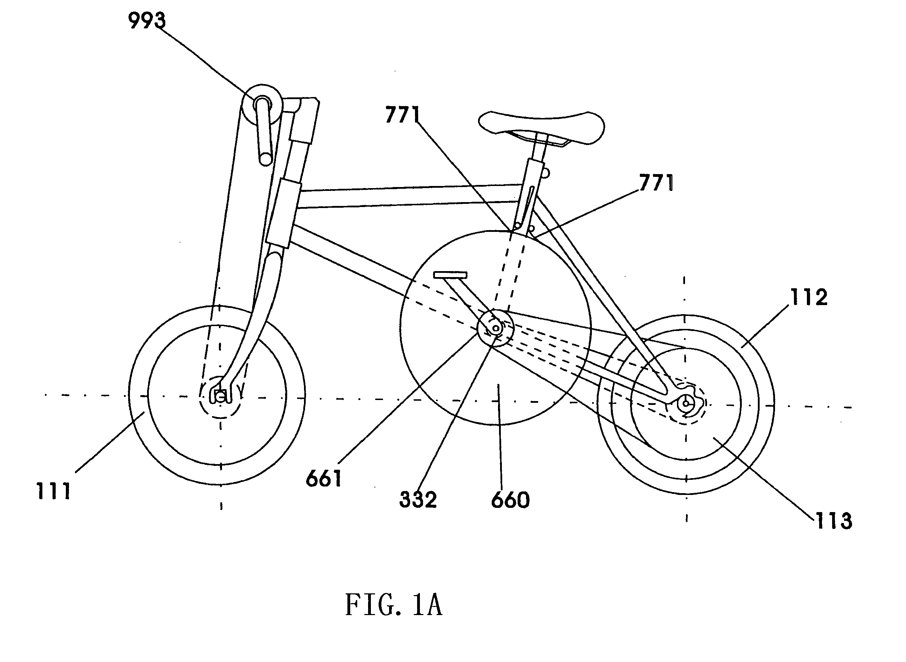

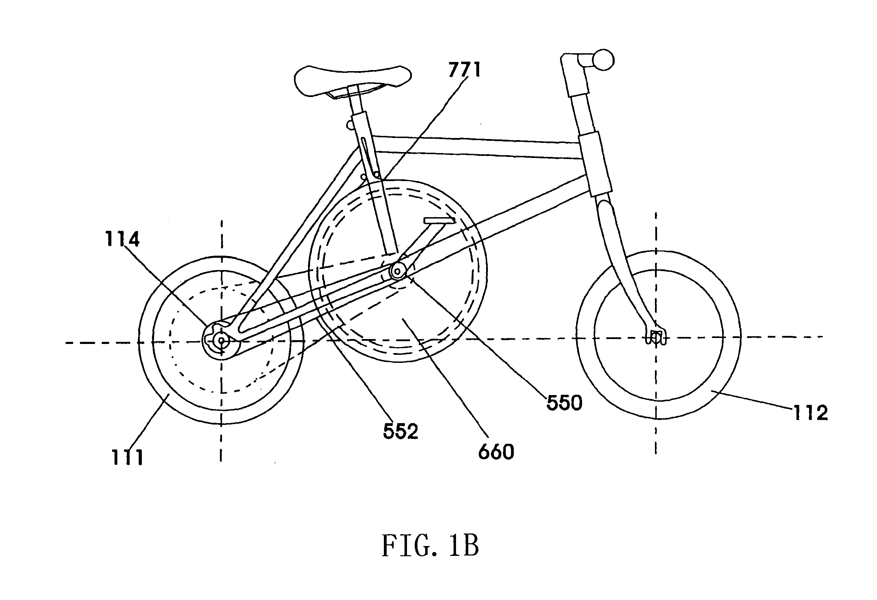

As shown in Figs. 1A and 1B, the multi-functional fitness bicycle 200 of the invention comprises at least front and rear wheels 111 and 112, a saddle 220, a frame 330 and a hand-and-foot drive system; the frame 330 is for supporting the front and rear wheels, the saddle and a front fork 990, the hand-and-foot drive system includes at least a pedal 440, and a foot drive chainwheel 550, the foot drive chainwheel 550 is coupled with the pedal 440 via a pedal crank 551; the hand-and-foot drive system further comprises a front wheel drive system including a hand drive chainwheel 991, which is driven by a rocker arm 992 integrated with the front fork; the front drive rocker arm is pivoted to a front drive axle seat 993 and drives the front wheel 111; the bicycle further comprises an inertial energy storage wheel 660 for adjusting resistance automatically, a variable-resistance control system, a front damping system that can be imbedded with a transmission axle, and a shifting structure of the foot drive middle axle. By adopting the above-mentioned special structures, the fitness bicycle can store a large amount of kinetic energy even it moves slowly so that the exerciser can smoothly perform exercises even he/she selects to experience large kinetic resistance, and the front damping system imbedded with a front drive axle enables the bicycle to achieve good damping capability of the front wheel when a hand drive device is applied. The variable-resistance control system can adjust automatically the kinetic resistance of the inertial energy storage wheel when the bicycle is pedaled.

The multi-functional fitness bicycle in accordance with the invention, wherein the inertial energy storage wheel 660 is arranged on a slope tube 331 on the rear wheel of the fitness bicycle or on a foot drive axle seat 332 of the fitness bicycle, a flywheel 661 is arranged on the central portion of the inertial energy storage wheel for driving the energy storage wheel, the flywheel 661 is fixed coaxially with the inertial energy storage wheel and they rotate together, and the flywheel is coupled with the rear wheel drive chainwheel 113 on the rear wheel 112 of the fitness bicycle via a chain. When riding on it for exercising, the driving force from legs is transmitted to the rear wheel driving flywheel 114 by driving a foot drive chainwheel 550 and a drive chain 552 on the right side of the driving middle axle, the flywheel 114 brings the rear wheel to rotate so as to move the bicycle forward. Meanwhile, the drive chainwheel 113 on the rear wheel in turn rotates and transmits the driving force to the inertial energy storage wheel 660 via a transmission chain 662 and the drive flywheel 661, then brings the inertial energy storage wheel to rotate together. A damping belt 771, which is a principal part of the variable-resistance control system, is arranged on the outer rim of the inertial energy storage wheel 660. The damping belt is arranged around the inertial energy storage wheel 660 and produces a friction force to the inertial energy storage wheel depending on its tightened degree, and produces variable resistance via a series of transmission systems and an automatically adjusting structure, thus the exerciser can obtain different kinetic resistances at different pedaling positions and speeds, and he can exercise in balance even the bicycle rotates at a very low speed, and thereby achieving a good exercising effect.

In order to accumulate more kinetic energy when the inertial energy storage wheel 660 is at low mass, an accelerating transmission ratio between the drive chainwheel 113 on the central axle of the rear wheel 112 and the drive flywheel 661 on the center of the inertial energy storage wheel 660 may be increased as large as possible, that is, the number of teeth of the drive chainwheel 113 of the rear wheel may be as many as possible and the number of teeth of the energy storage wheel drive flywheel 661 may be as little as possible. If necessary, such structures as an intermediate accelerating transmission chainwheel and an intermediate accelerating axle may be provided thereto.

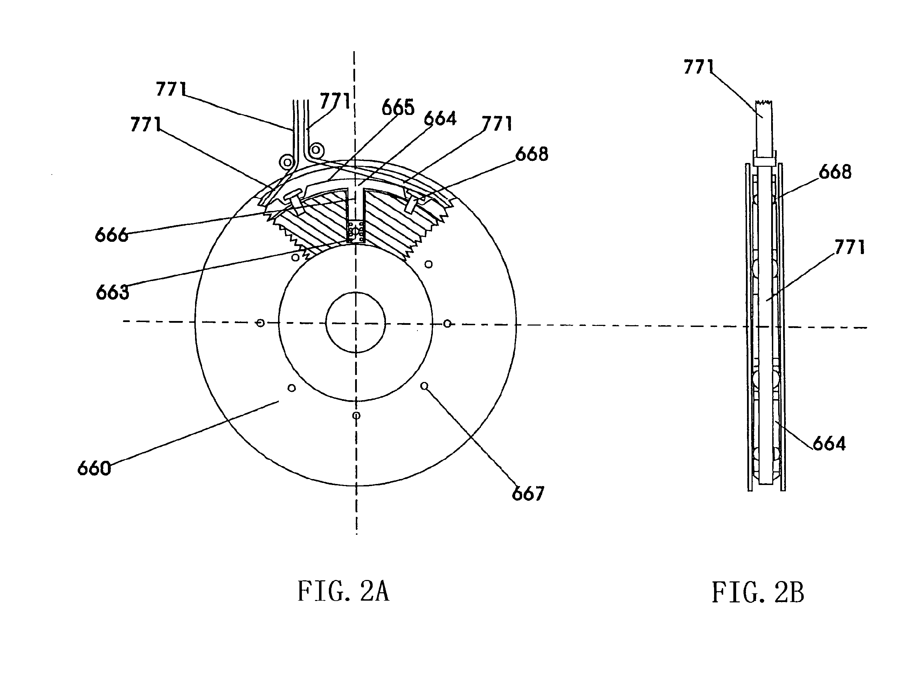

As shown in Figs. 2A and 2B, a plurality of symmetrically distributed slot holes 663 are radially arranged in the groove around the inertial energy storage wheel 660 of the multi-functional fitness bicycle 200 of the present invention. T-shape fly blocks 664 are placed in the slot holes 663. Under the centrifugal force and the gravity, the T-shape fly blocks 664 can move along the radial direction of the inertial energy storage wheel in the slot holes 663. A circumferential groove that can limit the outer end of the T-shape fly block to move only along the radial direction of the inertial energy storage wheel may be provided along the circumferential direction within the outer rim of the inertial energy storage wheel 660. The shape of the circumferential portion 665 at the outer end of the T-shape fly block may be in an arcuate shape having a same curvature of the circumferential groove. The arcuate portion and a lever portion 666 in the radial slot hole 663 of the inertial energy storage wheel 660 form the T-shape fly block that can move only radially along the inertial energy storage wheel 660 under the centrifugal force and the gravity. The damping belt 771 on the inertial energy storage wheel covers each of the T-shape fly blocks. When the inertial energy storage wheel 660 rotates at a certain speed, each of the T-shape fly blocks will further push agaist the damping belt 771 under the centrifugal force. Thus, the friction resistance belt can automatically increase kinetic resistance to the whole inertial energy storage wheel 660, the higher the speed of the inertial energy storage wheel 660 is got, the larger the kinetic resistance is newly provided, and the resistance can rapidly varies along with the change of the speed of the inertial energy storage wheel.

When the exerciser performs exercises by feet driving in parallel in conjuction with hands or not, since the force is obviously big when pedaling, the driving force will enable the inertial energy storage wheel to move accelerated and each of the T-shape fly blocks will push the damping belt 771 with bigger centrifugal force, thus the whole inertial energy storage wheel 660 bears bigger friction force, and the kinetic resistance received by feet will increase simultaneously, and as a result the exerciser will not feel hollow because of the insufficient kinetic resistance.

When the feet are at a position of hooking upward, since the driving force decreases obviously, the speed of the inertial energy storage wheel also decreases rapidly by the damping belt. At this time, the pushing force of each of the T-shape fly blocks to the damping belt 771 also decreases rapidly, and the kinetic resistance to the inertial energy storage wheel also decreases, thus the kinetic resistance received by the feet also decreases, and the feet can smoothly and effectively hook upward and start a new pedaling cycle. As a result, the whole movement is very balanced and the speed of the bicycle may be very slow.

When the bicycle is only pedaled alternately by feet, since the feet are at different angular positions in the circumference, the driving force provided to inertial energy storage wheel of the fitness bicycle may be different even differ significantly. As described previously, the T-shape fly blocks can also quickly respond to the change of the driving force and make the exerciser feel more comfortable to bear the resistance, thus the whole movement can be smoother and the exercising and body building can achieve better results.

The middle portion of the outer periphery of the arcuate portion of the T-shape fly block may be in an arcuate shape having a corresponding curvature. The two end portions of the arcurate portion extending from the middle portion are arranged as transitional arcuate surfaces. Such a structure can enable a best contact and force-bearing relation between each of the centrifugal fly blocks and the damping belt 771.

Vent holes 667 are arranged in parallel with the central axis of the inertial energy storage wheel 660 at the bottom of each radial slot hole 663 near the center of the energy storage wheel. When the T-shape fly block 664 moves reciprocatedly in the radial slot hole 663, the air can easily flows into and out from the radial slot hole 663 via the vent hole 667 so that radial movement of the T-shape fly block will not be affected seriously by the change of the air pressure inside the slot hole. According to actual requirement, vent holes having the same function may also be arranged at proper positions of the T-shape fly blocks etc. A spring for damping may be arranged under the T-shape fly block 664 so as to prevent the T-shape fly block 664 from being clashed with the inertial energy storage wheel 660 and avoid noises. Limiting bolts 668 can be placed between neighboring T-shape fly blocks along radial direction, and be fixed to the inertial energy storage wheel 660 along the radial direction to restrict the maximum separation range of the whole T-shape fly blocks.

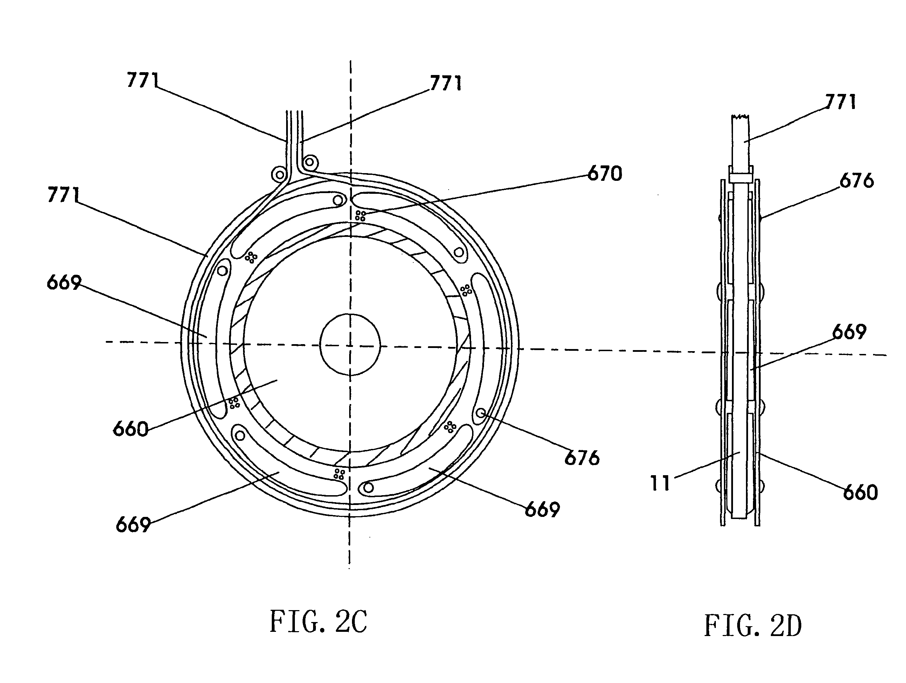

As shown in Figs. 2C and 2D, on the multi-functional fitness bicycle of the invention, the inertial energy storage wheel 660 that automatically adjusts the kinetic resistance along with its speed may further adopt a simpler structure. Centrifugal fly blocks 669 are symmetrically and equidistantly placed in a deep concave groove formed in the rim of the inertial energy storage wheel 660. The centrifugal fly blocks 669 can rotate and extend around the shaft on one side thereof under the centrifugal force and the gravity. A push spring 670 may be arranged between the inner side of the end of each centrifugal fly block 669 that can swing and the inner bottom of the groove in the outer rim of the inertial energy storage wheel 660. A damping belt 771 is arranged at the outer periphery of the centrifugal fly blocks 669. When the inertial energy storage wheel 660 rotates at a high speed, each centrifugal fly block 669 or other structures for reducing impact, under the centrifugal force etc., swings and extends around shaft 676 on the one side thereof so as to further push against the damping belt 771 to increase the kinetic resistance of the inertial energy storage wheel 660. On the contrary, when the inertial energy storage wheel 660 rotates at a low speed, the outward swing and the pushing force to the damping belt 771 produced by each centrifugal fly block 669 will decrease, thus the kinetic resistance received by the whole inertial energy storage wheel 660 will decrease. The function of the structures for reducing impact, such as the push spring, is to prevent each centrifugal fly block 669 from clashing with the inertial energy storage wheel 660 under the gravity and the pushing of the damping belt 771. By adopting the structure, the fitness bicycle can be continuously and balancedly pedaled at a low speed so as to achieve high effective exercising within a small space.

The inertial energy storage wheel on the fitness bicycle in accordance with the present invention may either be arranged at the foot drive middle axle or at the axles of the front and rear wheels or adjacent thereto.

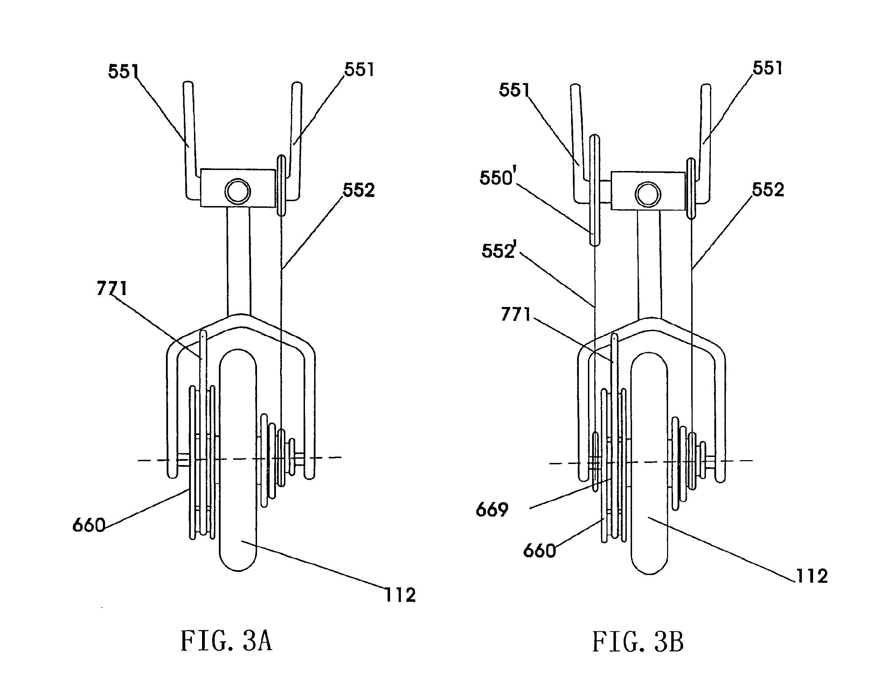

In one embodiment, as shown in Fig. 3A, the inertial energy storage wheel that includes a resistance variable control mechanism is directly fixed to the hub of the rear wheel 112. In this case, the inertial energy storage wheel 660 rotates with the rear wheel 112 at the same angular speed, and the centrifugal fly block 669 thereon, under the centrifugal force etc., pushes against the damping belt 771 that can be fixed on the frame. The higher the speed of the rear wheel 112 is got, the bigger the centrifugal force is produced because the real wheel 112 brings the centrifugal fly block 669 to rotate at the same speed, thereby generating bigger friction resistance automatically. The structure of this embodiment is simple, but when the speed of the bicycle and the rear wheel is low, the fly block will produce less centrifugal force, and the range of the resistance that can be automatically varied will become small, the efficiency of the whole structure will decrease. However, the structure can limit the speed of the bicycle automatically. Higher kinetic resistance can be achieved by adjusting the shape and state of the contact surface between the damping belt 771 and the inertial energy storage wheel.

In another embodiment, as shown in Fig. 3B, the inertial energy storage wheel 660 that includes a resistance variable control mechanism is arranged on one mechanism independent from the rear wheel that can achieve a higher speed. The inertial energy storage wheel 660 can rotate at a higher speed than the rear wheel through a bigger foot drive chainwheel 550' at the middle axle of the pedals and a transmission chain 552', or through other variable-speed control mechanisms so that the centrifugal fly block thereon can generate a bigger centrifugal force at a higher rotating speed, and generate bigger kinetic resistance by pushing the damping belt 771 arranged on the rear frame. The structure and its engaging system may be more complicated, but the function of the whole system can be better.

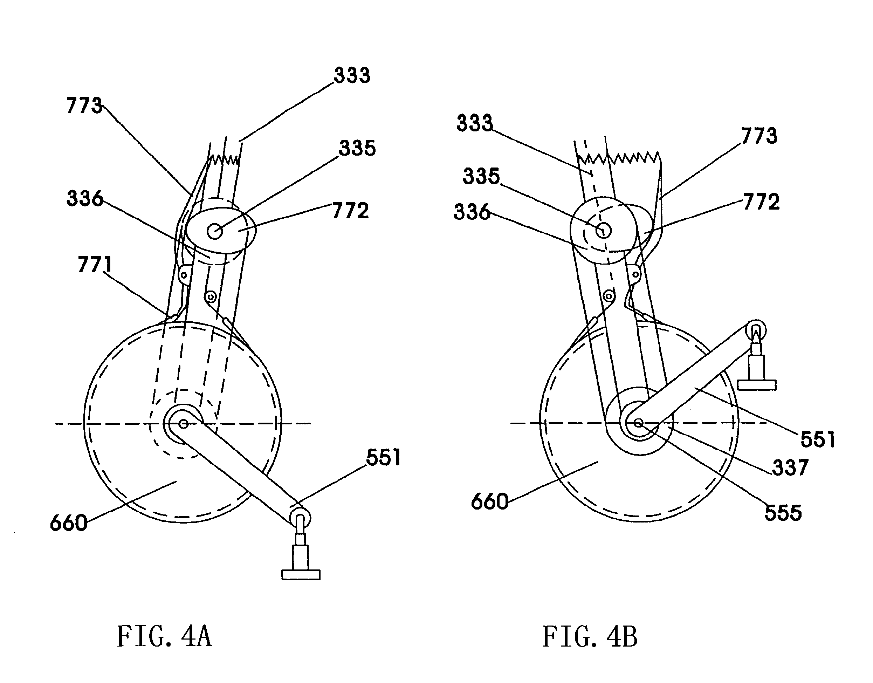

In order to guarantee this multi-functional fitness bicycle to steadily provide resistance corresponding to the driving force during pedaling, the structure of the variable-resistance control system arranged on the fitness bicycle with the resistance varied synchronously with the foot drive force can also be as below. As shown in Figs. 4A and 4B, a rotating axle 335 is arranged on the central upright tube 333 or the front lower slope tube etc. of the frame. A smaller transmission chainwheel 336 is arranged on one end of the rotating axle 335, and correspondingly, a driving chainwheel 337 having the same number of teeth as the above-mentioned transmission chainwheel 336 is arranged on the foot drive middle axle 555 on the right side and close to the center thereof. Outside the driving chainwheel 337, the foot drive chainwheel 550 is fixed at the same axle. Moreover, the driving chainwheel 337, the foot drive chainwheel 550 and the driving crank on one side can be fixed together via the foot drive middle axle 555, no positional and angular changes occur between them. An eccentric wheel 772 having different distances from its rim to its center can be fixed on the left side of the rotating axle 335. One end of a push rod 773 is arranged on the central upright tube 333 or the front lower slope tube of the frame, the middle portion of the push rod 773 abuts against the eccentric wheel 772, and the push rod 773 can be coupled to the damping belt 771 on the outer periphery of the inertial energy storage wheel 660 in a plurality of positions thereon via a steel wire, a draw wire, an iron chain or a spring. The top end of the push rod 773 can be connected to a reset spring, which pulls the push rod 773 against the eccentric wheel 772. When the pedal crank at one side is at an optimum driving position, the distal end of the eccentric wheel 772 is at the position where pushing away the push rod 773 so as to produce a maximum angular displacement, accordingly, the low end of the push rod 773 will produce a maximum pulling force to the damping belt 771, enabling the damping belt 771 to provide a maximum kinetic resistance to the inertial energy storage wheel 660 as well as to the whole driving system. On the contrary, when the pedal crank at the one side is in a position where driving is most difficult, the eccentric wheel 772 shall rotate into a position where its shortest (nearest) periphery pushes the top end of the push rod 773 so as to produce a minimum angular displacement, accordingly, the lower end of the push rod 773 will produce a minimum pull force to the damping belt 771, enabling the damping belt 771 to provide a minimum kinetic resistance to the inertial energy storage wheel 660 as well as to the whole driving system. The structure is mainly designed for the condition of pedaling in parallel. In order to meet the need of pedaling alternately, an elliptical wheel can also be arranged on the eccentric wheel, the pull/push rod can be selected to abut against the eccentric wheel or on the elliptical wheel, thus the tightening of the damping belt can be changed twice within one pedaling period, i.e., achieving a balanced resistance under alternately pedaling condition.

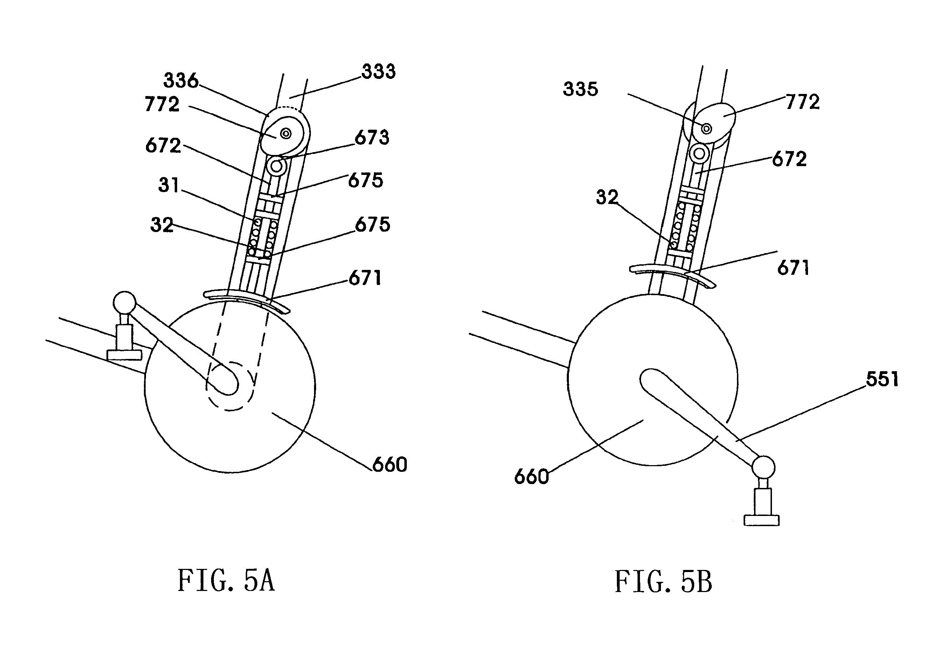

In order to meet the requirement of naturally adjusting the resistance when a resistance magnetic control system is adopted, a pull/push rod 672 with a roller at its top end can be arranged along the axis of the central upright tube at the lower end of the eccentric wheel 772. As shown in Figs. 5A and 5B, the bearing structure is a roller 673 arranged on the top of the pull/push rod and contacts with the eccentric wheel 772 in tangent direction. A magnetic damping plate 671 may be arranged at the lower end of the pull/push rod 672, and two guide plates 674 and 675 having longitudinal guide holes that are fixed to the central upright tube 333 may be arranged on the central portion of the pull/push rod 672, thus the pull/push rod 672 may extend through the two longitudinal guide holes and move upward and downward along its determined direction. A spring push plate or a spring push rod 31 may be arranged at a proper position on the central portion of the pull/push rod 672, and a reset spring 32 that always urges the pull/push rod 672 upward naturally may be arranged between the spring 31 and the lower guide plate 675.

Similar to the working principles as described previously, when the pedal crank 551 is at the optimum driving position, the cam shall rotate into a position where its longest (farthest) periphery pushes the bearing on top end of the pull/push rod 672, the bearing brings the whole pull/push rod 672 downward at a maximum displacement, accordingly, the magnetic damping plate 671 at the lower end of the pull/push rod 672 is in a position closest to the inertial energy storage wheel made of iron, thus producing a maximum magnetic resistance and kinetic resistance. On the contrary, when the pedal crank 551 is in a position where the driving is most difficult, the eccentric wheel 772 shall rotate into a position where its shortest (nearest) periphery pushes the bearing on the top end of the pull/push rod 672 to allow the magnetic damping plate 671 at the lower end of the pull/push rod 672 to be at an upmost position and farthest from the inertial energy storage wheel 660 made of iron, thus producing a minimum magnetic force and kinetic resistance. The pushing force of the reset spring at any position and any state is bigger than the attraction force between the magnetic damping plate 671 and the iron inertial energy storage wheel 660, ensuring that at the given position and the state, the magnet and the pull/push rod 672 always tend to move upward naturally. A positional limiting structure may also be arranged in a proper position on the left side of the upright tube for preventing the magnetic damping plate 671 from contacting with the iron inertial energy storage wheel 660 at any condition. According to actual requirement, the eccentric wheel may also be an elliptical wheel so as to meet the requirement of alternate pedaling.

According to actual requirement, in order to achieve the adjusting object, an inner derailleur may be arranged between the driven chainwheel 557 and the eccentric wheel 772. By means of a manual control mechanism, the inner derailleur can either make the driven chainwheel 557 and the eccentric wheel 772 rotate at the same angular speed, or make the eccentric wheel 772 rotate at an angular speed twice of the driven chainwheel 557, thus adapting to different conditions of driving with two feet in parallel and driving alternately with phase difference of 180° and satisfying the need of shifting between the two conditions.

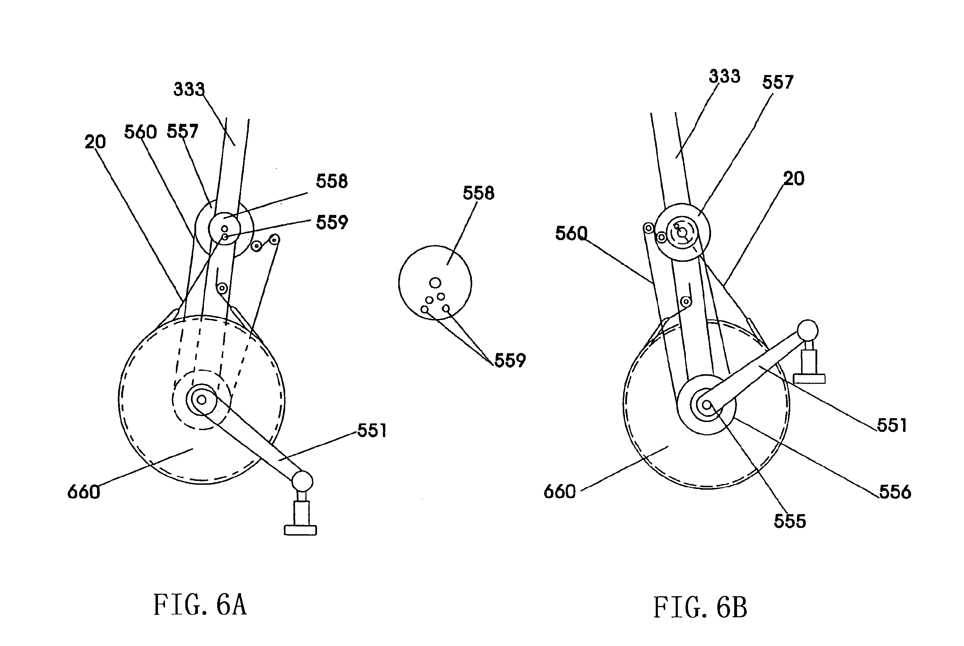

In order to make the resistance of the fitness bicycle be adjusted automatically with the variation of the rotating angles of the pedal crank 551, i.e., when the two feet pedal downward in parallel, the friction resistance received by the inertial energy storage wheel 660 increases accordingly, and when the two feet lift upward in parallel, the friction resistance received by the inertial energy storage wheel 660 decreases accordingly. A driving chainwheel 556 may be provided on the foot drive middle axle 555. As shown in Figs. 6A and 6B, a driven chainwheel 557 having the same number of teeth as the driving chainwheel 556 may also be provided at a certain height on the central upright tube, a resistance adjusting wheel 558 may be provided on the central upright tube and coaxial with the driven chainwheel 557. A plurality of regulating holes 559 at varying distances to the center of the resistance adjusting wheel 558 may be arranged on the side of the resistance adjusting wheel 558, thus the rotating resistance can be adjusted by inserting a bolt pin, as a lock, into different regulating holes 559. One end of the damping belt 771 may be coupled with the bolt pin via a draw wire. When driving, via the driving chainwheel 556, the chain 560 and the driven chainwheel 557, the pedal crank 551 and the foot drive middle axle 555 bring the resistance adjusting wheel 558 to rotate with the pedal crank 551 at the same angular speed, and the regulating bolt pin fixed at a position on the side of the resistance adjusting wheel 558 can be in the same moving rhythm with the pedal crank, and accordingly pulling the regulating steel wire 20 to pull the friction resistance belt with varying force so as to make the exerciser experience different kinetic resistance.

The function that the friction resistance increases simultaneously by pedaling downward with both feet can be realized by selecting the connecting position of the chain between the driving chainwheel 556 and the driven chainwheel 557.

The pull range of the regulating steel wire 20 can be adjusted by fixing the regulating bolt pin in different holes 559 at different distance from the rotating center, thus the resistance variable control range of the whole damping belt 771 (a difference between the maximum and minimum resistance) can be selected and determined in accordance with different situations and requirements of exercising.

After the driving mode of pedaling downward and hooking upward with two feet in parallel is changed to the mode of pedaling alternately with 180°phase difference, when the pedal crank rotates by 180°, the resistance usually need to be increased or decreased. For this purpose, a smaller driven chainwheel 557' having half the number of teeth of and coaxial with the driven chainwheel 557 may be arranged outside the driven chainwheel 557, and a derailleur may be provided accordingly thereto to enable the chain 560 to be shifted between the bigger and smaller chainwheels. When the chain brings the smaller chainwheel 557' having half the number of teeth to rotate, the resistance adjusting system can provide a maximum friction resistance to the inertial energy storage wheel when any one of the feet that pedal alternately with 180°phase difference is at the optimum pedaling position. On the contrary, the resistance adjusting system can provide a minimum friction resitance to the inertial energy storage wheel when any one of the feet is at worst pedaling position, as shown in Fig. 6B.

According to actual requirement, in order to achieve the adjusting object, an inner derailleur may be arranged between the driven chainwheel 557 and the resistance adjusting wheel 558 instead of the smaller driven chainwheel 557' and the derailleur. By means of a manual control mechanism, the inner derailleur either enables the driven chainwheel 557 and the resistance adjusting wheel 558 to rotate at the same angular speed, or enables the resistance adjusting wheel 558 to rotate at an angular speed twice of the driven chainwheel 557, thus adapting to different conditions of driving with two feet in parallel and driving alternately with 180°phase difference and satisfying the need of shifting between the two conditions.

The angular positional relationship between the pedal crank 551 and the resistance adjusting wheel 558 as well as the bolt pin thereon may be achieved by shifting the engaging position of the chain 560 on the chainwheels.

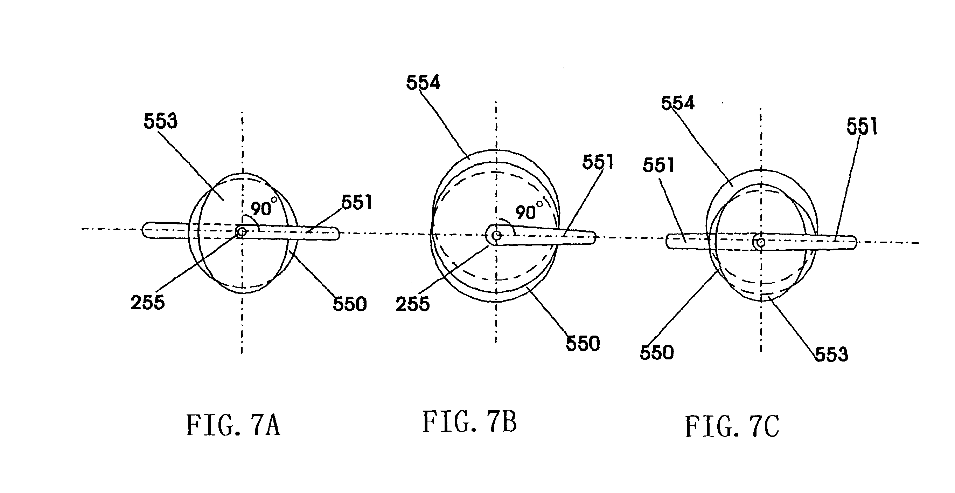

As shown in Fig. 7A, in order to drive the fitness bicycle 200 balancedly and achieve better exercising effect, a non-round drive chainwheel 553 can be adopted while an ordinary round chainwheel 550 is adopted on the foot drive axle seat 332 of the fitness bicycle. Preferably, the non-round drive chainwheel 553 is an elliptical chainwheel. In this case, the foot drive middle axle is still at the intersection point of the long axis and short axis of the elliptical chainwheel, and the angle between the central line of the pedal crank and the long axis of the ellipse can be set around 90°. Such a structure is suitable for the bicycle of which the left and right pedal cranks are provided at a fixed angle of 180°.

As shown in Figs. 7B and 7C, a drive chainwheel 554 in round shape or in other shape may be installed eccentrically on one side of the foot drive middle axle. The foot drive middle axle is not positioned at the center of the drive chainwheel 554 in round shape or in other shape, and the specific eccentric position depends on actual situation. An angle formed by the radial central line of the pedal crank and the line connecting the geometrical center of the eccentrically installed chainwheel and the center of the pedal crank on the plane of the chainwheel can be around 90°. On the right side of the foot drive middle axle 555 that has adopted the above mentioned specific chainwheel and arrangement, an ordinary round foot drive chainwheel 550 having its center coincide with that of the foot drive middle axle 555 may also be provided thereto.

As shown in Fig. 7C, the two specific structures may also be combined. An elliptical chainwheel is arranged on the right side of the foot drive middle axle 555 to adapt to the condition in which the left and right pedal cranks are formed at an angle of 180°, and meanwhile a round chainwheel or in other shape is arranged eccentrically to adapt to the condition in which the left and right pedal cranks are in parallel. When the pedal cranks of the fitness bicycle of the present invention are at an angle of 180°, i.e., the alternate pedaling structure, the feet are in a condition that they can pedal forcefully twice within one pedaling period, i.e. a period during which the foot drive chainwheel 550 rotates one circle, thus the chainwheel is designed in a symmetrically elliptical shape. When the pedal cranks are provided in parallel, i.e., the two pedal cranks are formed at an angle of 0°or approximate 0°, there is merely one time within one period when it is convenient for the feet to apply force, thus the round or eccentric chainwheel need be arranged eccentrically. In this case, a round foot drive chainwheel 550 having its center coincide with the foot drive middle axle 555 may also be provided.

When adopting the above-mentioned particular arrangement of the chainwheel, a tension wheel shall be provided to the drive chain 552, and a derailleur shall be provided near the foot drive chain 550, achieving tension and relaxing of the drive chain 552 and shifting between different drive chains.

The structures, including the inertial energy storage wheel and the eccentric chainwheel that can adjust resistance automatically, may also be applicable to stationary fitness equipment such as a fitness car and the like.

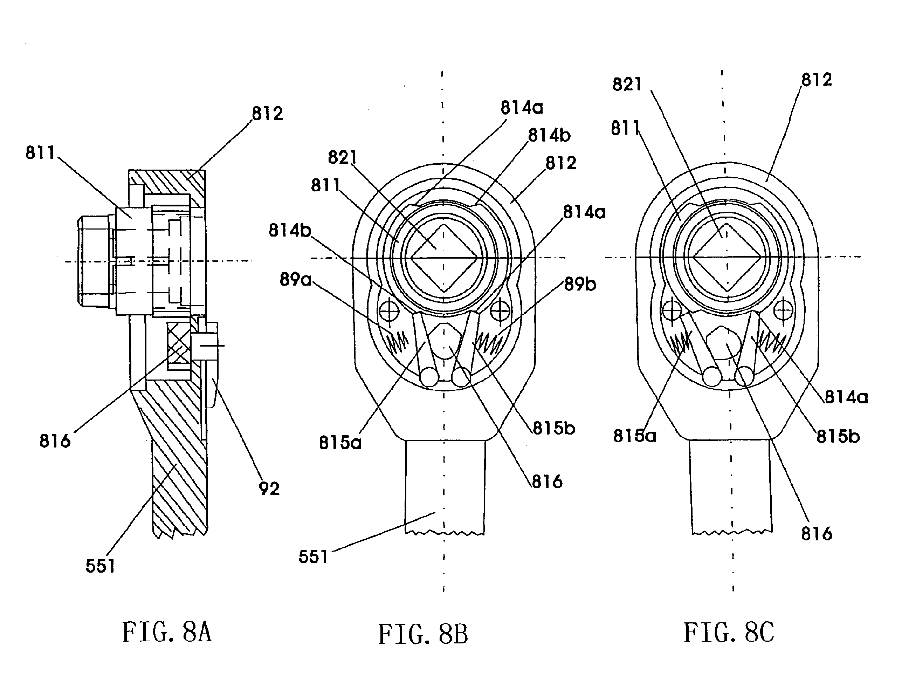

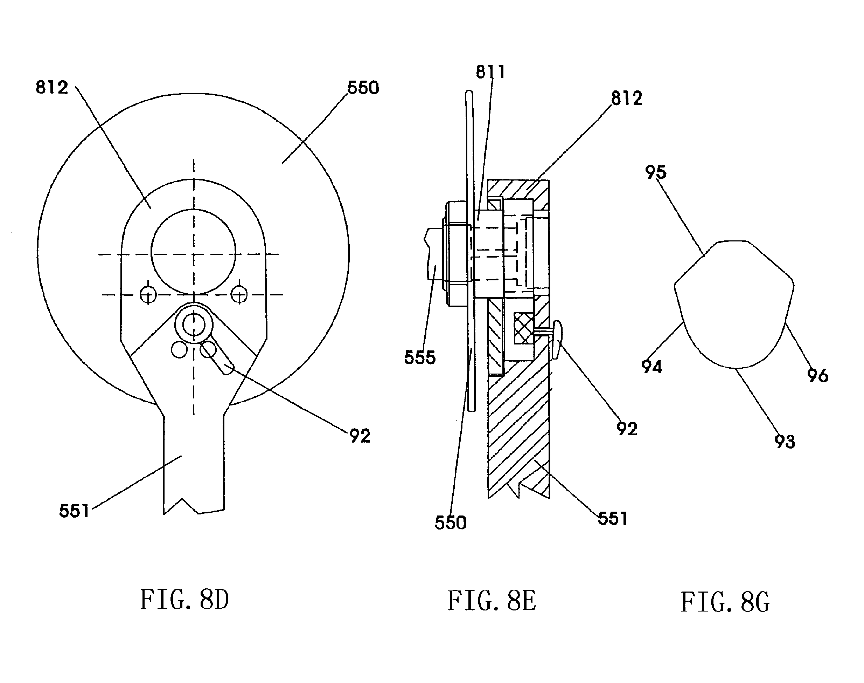

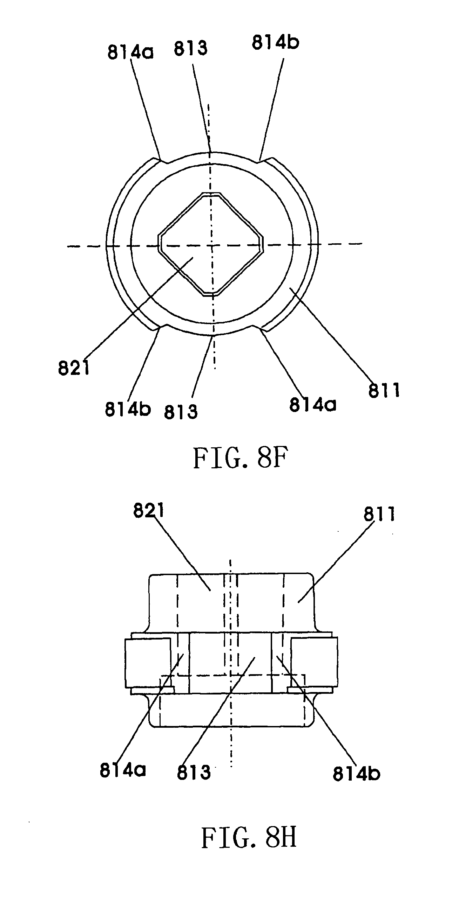

According to the fitness bicycle of the present invention, a pedaling shifting structure 810 for shifting between a parallel pedaling and an alternate pedaling is arranged between the foot drive middle axle and the left and right pedal cranks 551. As shown in Figs. 8A to 8H, the pedaling shifting structure includes an inner sleeve 811 fixed to one side of the foot drive middle axle, the inner sleeve 811 can move relative to an outer ratchet sleeve 812 coupled with the pedal crank. The pedaling shifting structure is locked at a predetermined position so as to arrange the pedal cranks in parallel around 360° or alternate at 180°. One notched portion 813 is arranged on each of the two radial symmetrical sides of the inner sleeve 811, engaging shoulders 814 are arranged on both sides of the notched portion 813, and correspondingly, two engaging arms 815 are arranged on the outer ratchet sleeve 812; the ends of the engaging arms can be engaged to and held on the engaging shoulder so as to lock the inner sleeve 811 and the outer ratchet sleeve 812 at a predetermined position, i.e., the pedal cranks are in parallel or alternate position.

A engaging push wheel 816 is further arranged on the outer ratchet sleeve 812 for engaging with the two engaging arms 815. The lower side of the engaging push wheel 816 is an arcurate pushing surface in equal radius, the arcurate pushing surface extending to the two sides in an upside down "□" shape is provided as a first pushing surface 817 capable of enabling the engaging arm to push the engaging shoulder, and a second pushing surface 818 is provided above the first pushing surface 817 capable of pushing the engaging arm away from the engaging shoulder. An elastic member corresponding to each engaging arm is further arranged on the outer ratchet sleeve 812. The spring can push the engaging arm 815 toward the engaging push wheel 816, thus the engaging push wheel 816 can lock one engaging arm to the engaging shoulder or two engaging arms to the two engaging shoulders simultaneously during rotating. Please note since the pedal moves forward in a single direction, when one engaging arm is locked to one engaging shoulder, the pedal crank shall be locked so as to be in concordance with the moving direction. A handle is arranged on the outer ratchet sleeve and on the other side of the engaging push wheel 816 so as to rotate the engaging push wheel. Moreover, marks may be set previouslyto properly provide a single side locking point and two side locking points.

Meanwhile, since the notched portions are arranged symmetrically on the inner sleeve, according to different positions of the pedal cranks, the two pedal cranks may be set as below: when the two pedal cranks are in parallel, if the handle is shifted to a position of a single side locking, the pedal cranks can be pedaled in parallel and can slide backward in a single direction, and if the handle is shifted to a position of two side locking, the pedal cranks can be pedaled in parallel and is locked (i.e., cannot slide backward in one direction); when the two pedal cranks are pedaled alternately at 180°, if the handle is pushed to a position of one side locking, the pedal cranks can be pedaled alternately and can slide backward in one direction, and if the handle is pushed to a position of two sides locking, the pedal cranks can be pedaled alternately and is locked (i.e. cannot slide backward in a single direction).

When using the bicycle, the function of the whole structure will be changed once the handle is shifted, this is not only convenient for locking the inner and the outer sleeves as one piece, but also for forming them into a structure of a ratchet wheel.

A round cover or in other shape may be provided at the outer end the inner sleeve 811 and the outer ratchet sleeve 812 so as to enclose the whole ratchet structure as one piece.

If the pedaling shifting structure is positioned between the pedal crank on the left side and the foot drive middle axle, adaptive adjustment can be made to its whole structure or partial structure (for example, the chainwheel and its relevant structure may not be arranged on the inner sleeve), but the whole structure can be basically the same.

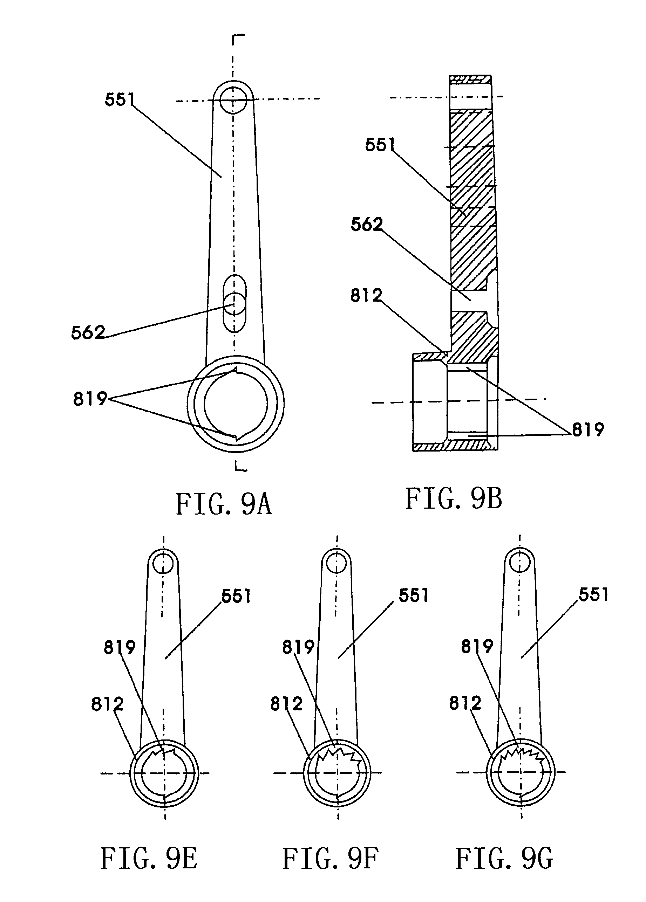

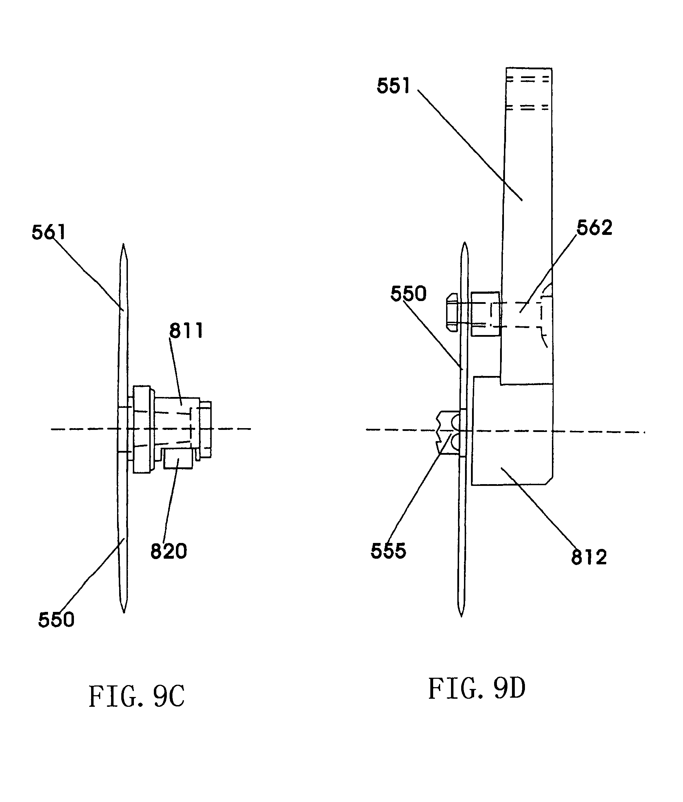

According to the fitness bicycle of the present invention, another embodiment of the pedaling shifting structure 810 may be arranged on one side of the foot drive middle axle 555. As shown in Figs. 9A to 9G, one end of the right pedal crank 551 is coupled with the pedal, and the other end is fixed to the outer ratchet sleeve 812 of the pedaling shifting structure that can adjust angle of the two pedal cranks. Two notches 819 that are symmetrically distributed along the circumferential direction may be arranged on the inner side of the outer ratchet sleeve 812, i.e., they are distributed at 180° around the circle. The center of the inner sleeve 811 inside the outer ratchet sleeve 812 can be tightly engaged with pin-shape square heads on two ends of the foot drive middle axle 555. A tongue 820 is arranged at a proper position on the outer periphery of the inner sleeve 811. The right pedal crank 551 can be conveniently shifted to an angular positional relationship of 0° or 180° by engaging the two symmetrically distributed notch 819 in the outer ratchet sleeve 812 with the tongue 820 on the inner sleeve 811. Thus, when the left pedal crank is fixed to the foot drive middle axle 555, the left and right pedal cranks 551 can be conveniently set at an angular positional relationship of 0° or 180° and can be quickly shifted between 0° and 180° by setting the angular positional relationship between the pin-shape square heads on two ends of the foot drive middle axle 555 and the pin-shape square holes on the left pedal crank and the inner sleeve 811 of the right ratchet wheel.

The foot drive chainwheel 550 may be fixed to the left side outside the inner sleeve 811 of the right ratchet wheel by welding.

More notches 819 may be set on the inner side of the outer ratchet sleeve 812 on the right side of the foot drive middle axle 555 according to actual requirement. As shown in Figs. 9E to 9G, those notches 819 may be distributed on both sides of one of the two symmetrical notches, which is the notch that allows the two pedal cranks are in a nearly parallel position when the tongue 820 is engaged into the notch. The purpose of such an alignment is to enable the two pedal cranks be conveniently fixed at an angular positional relationship of 0° or 180°, or at a nearly parallel positional relationship such as 15°, 30° or 45°. This is because on the basis of the applicant's observation, an animal does not run with four legs exactly in parallel at 0°. Options may be made according to differences between exercisers to adjust the two pedal cranks and drive them in a nearly parallel positional relationship.

The foot drive chainwheel 550 has a connecting hole 561, and a fixing hole 562 of the notch is provided on the pedal crank corresponding to the connecting hole 561, by connecting the connecting hole 561 and the fixing hole 562 with a bolt, the right pedal crank and the foot drive chainwheel 550 can be locked as one piece, and the left and right pedal cranks are in a positional relationship of 180°.

A multi-functional fitness bicycle of the present invention, a pedaling shifting structure having both the function of a one-way ratchet wheel that can be unidirectionally locked in the driving direction and allows the inner and outer sleeves to relatively slide in the non-driving direction, and the function of conveniently bidirectionally locking the inner ratchet sleeve 811 and the outer ratchet sleeve 812, can be arranged between the foot drive middle axle 555 and the left or right pedal crank 551. As shown in Figs. 8A to 8G, the pedaling shifting structure may be constructed as below. When the pedaling shifting structure is between the foot drive middle axle 555 and the right pedal crank 551, a drive structure, such as a drive chainwheel or a gear can be riveted or locked with square opening to the left end of the inner ratchet sleeve 811, pin-shape square holes 821 that can be engaged with the pin-shape square heads on both ends of the foot drive middle axle 555 may be provided in the middle of the inner ratchet wheel 811. The inner ratchet sleeve 811 is formed symmetrically on the periphery thereof with two notched portions 813 that span a certain angle. Engaging shoulders 814a and 814b that can perfectly engage with the engaging arms 815 are arranged on the two ends of the two cut-away portions. Two engaging arms 815a and 815b may be arranged symmetrically on the outer ratchet wheel 812, and push springs 89a and 89b are arranged respectively on both sides of the engaging arms 815a and 815b. A engaging push wheel 816 that can adjust the working position of the engaging arms 815a and 815b may be arranged between the engaging arms 815a and 815b, a control handle 92 may be arranged on the other end of the engaging push wheel 816 outside the housing of the ratchet wheel. The engaging push wheel 816 inside the ratchet wheel may rotate and be at different working positions by operating the handle 92. The periphery of the engaging push wheel 816 includes four positional limiting and pushing surfaces, i.e., the arcurate surface 93 having same radius at the bottom, the left pawl separation surface 94 (the first pushing surface) on top portion, the pawl lock surface 95 (the second pushing surface) on left down side, and the pawl lock surface 96 (the first pushing surface) on the right side.

s shown in Fig. 8B, when the lock surfaces 94 and 96 on the engaging push wheel 816 push the engaging arms 815a and 815b respectively, the top ends of the engaging arms 815a and 815b push the corresponding engaging shoulders on the inner sleeve in a reverse direction, thus the inner sleeve of the whole ratchet wheel is bidirectionally locked, i.e., the inner sleeve and the outer sleeve cannot displace in the circumferential direction. In this case, the left and right pedal cranks 551 coupled with the inner sleeve 811, the outer sleeve 812 and the foot drive middle axle 555 are locked in an angular positional relationship of 180°, thus the fitness bicycle can meet the requirement of being used as a common bicycle that is driven alternately. Certainly, the left and right pedal cranks 551 may also be locked in an angular positional relationship of 0°. In this case, the two feet and legs can be in a fixed parallel position to drive the bicycle. In the above working state, the control handle 92 outside the engaging push wheel 816 can be at the left working position.

According to actual requirement, when the control handle 92 is shifted to the working position at right side, the whole engaging push wheel 816 also rotates by the same angle and enables the pawl sparation surface 94 thereon to contact with and push the engaging arm 815a on the left side, thus the top of the engaging arm 815a is completely separated from each engaging shoulder on the inner ratchet sleeve 811, but the engaging arm 815b on the right can still effectively push the engaging shoulder 814a on the inner ratchet sleeve 811. As a result, the inner and outer sleeves of the whole ratchet wheel can work in the circuferential direction in a mode of unidirectional locking in the driving direction, and when moving in a reverse direction, the inner and outer sleeves of the ratchet wheel are not connected and they can slide relative to each other. At this time, the whole structure is a one-way ratchet wheel that locks in the driving direction, as shown in Fig. 8C.

When using the bicycle, the function of the whole structure will be changed once the control handle 92 is shifted, this is not only convenient for locking the inner and outer sleeves as one piece, but also for forming them into a structure of a ratchet wheel.

A round cover 97 or in other shape may be provided to the left end of the inner ratchet sleeve 811 and outer ratchet sleeve 812, thus the whole ratchet wheel structure is enclosed as one piece. A connecting structure for the pedal cranks 551 may be symmetrically arranged on the extension line of the symmetrical central line between the left and right engaging arms 815a and 815b inside the outer ratchet sleeve 812, the diagonal of the corresponding pin-shape square hole inside the inner ratchet sleeve 811 shall also be in a position that can bisect symmetrically the inner ratchet sleeve 811. Accordingly, when the whole angle variable locking structure works at a reliable state, the left and right pedal cranks 551 can be conveniently adjusted to a working positional relationship of 180° or 0° (in parallel), and they can also be locked on the required position.

If the angle variable locking structure is positioned between the left pedal crank and the foot drive middle axle 555, adaptive adjustments can be made to its whole structure and partial structure (for example, a chainwheel may not be arranged on the inner ratchet sleeve), but the whole structure can be basically same.

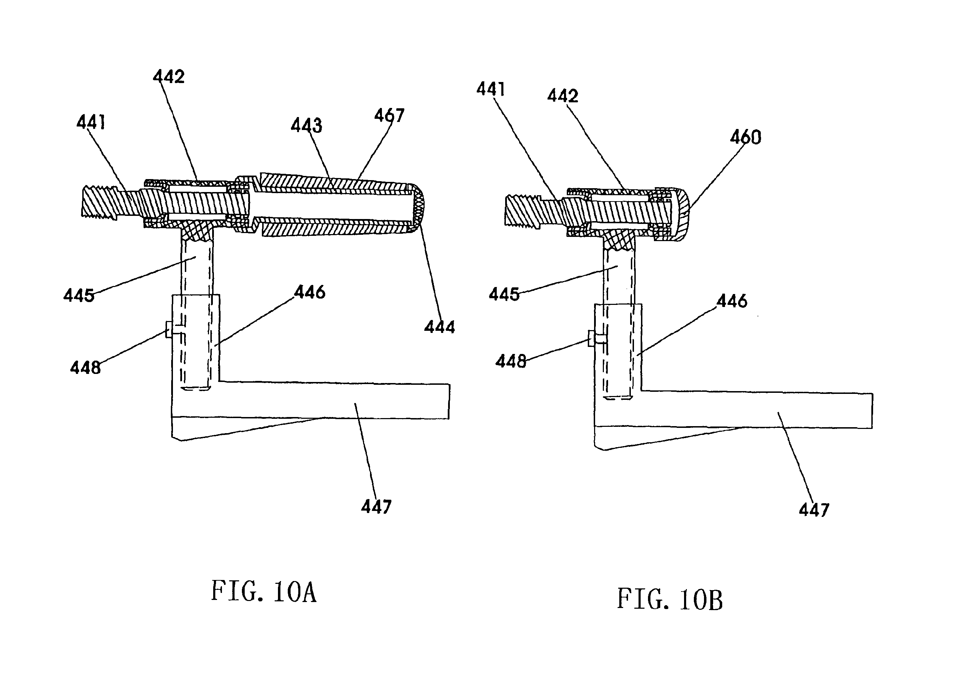

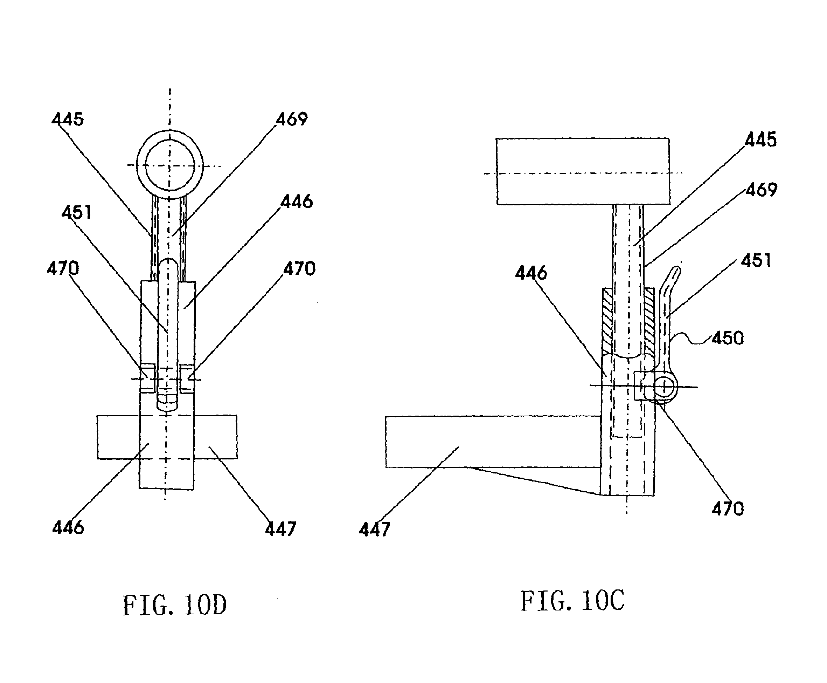

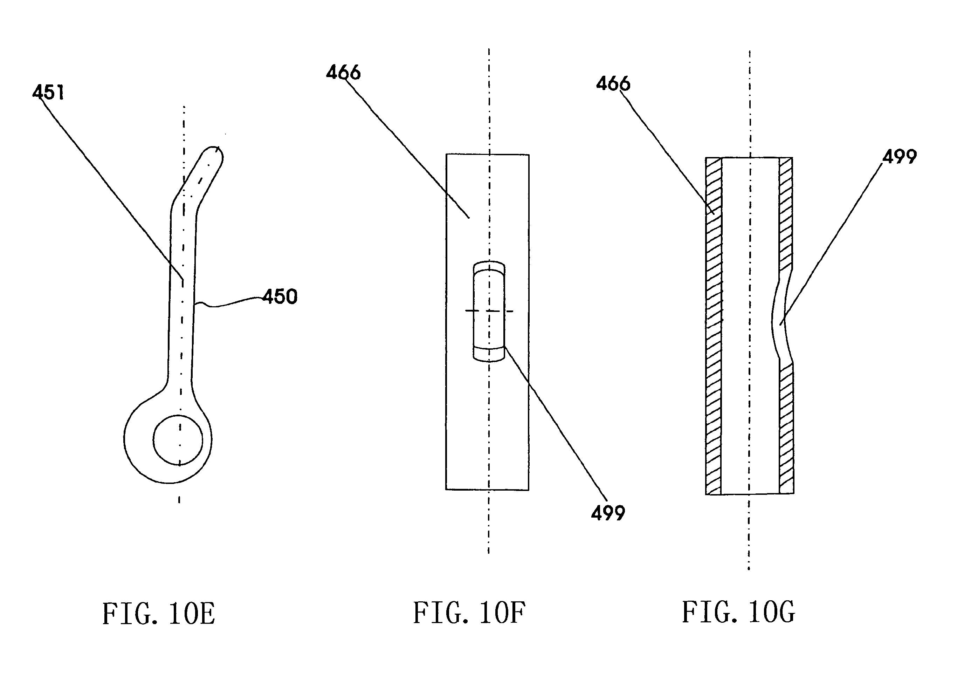

As shown in Figs. 10A and 10B, the fitness bicycle of the present invention may also adopt a pedal structure that can either be driven around 360° or at 180° alternately. The top of the pedal structure is a short upper sleeve 442 that can rotate around the pedal shaft 441, a connecting structure such as thread may be provided outside the upper sleeve 442, a sleeve extension portion 443 covered with rubber or other plastic material having good elasticity may be provided outside the upper sleeve 442 via the connecting structure like thread. Since the sleeve extension portion 443 is just above the foot of the exerciser, through it, the foot can bring the pedal to drive, and thus the whole pedal 440 can realize a 360 drive. The inner thread is provided at the side of the sleeve extension portion 443 close to the upper sleeve 442 such that the sleeve extension portion 443 can be reliably connected with the upper sleeve 442. A protrusion 444 may be arranged at the outer side of the sleeve extension portion 443. The protrusion 444 may either be integrated with the sleeve extension portion 443 or reliably connected to the outer end of the sleeve extension portion 443 via the connecting structure such as thread, so as to block the elastic material 467 like rubber outside the sleeve extension portion 443. Those elastic materials can protect the top of the foot from being hurt. Since the sleeve extension portion 443 is just above the pedal, when the sleeve extension portion is taken off, the activity space of the foot becomes larger.

As shown in Figs. 10A and 10B, the pedal upper sleeve 442 is fixed with a threaded rod 445 having outer thread and longitudinal key slot at its bottom, and the pedal 447 is fixed under the threaded rod 445 via a pedal sleeve 446 having inner thread engaged at the lower end of the treaded rod 445. The distance between the pedal 447 and the sleeve extension portion 443 above the pedal can be changed by adjusting the depth of the connected threads between the threaded rod 445 and the pedal sleeve 446, adapting to different height of feet and conditions of wearing different shoes. A radial bolt hole is provided on the pedal sleeve 446, which is locked to the threaded rod 445 by inserting a bolt 448 into the bolt hole and the longitudinal key slot on the threaded rod 445, locking the pedal 447 on a desired position and preventing it from rotating randomly around the threaded rod 445.

As shown in Fig. 10B, when the left and right pedal cranks are at a fixed angular positional relationship of 180°, the sleeve extension portion 443 on the pedal can be removed from the pedal upper sleeve 442, instead, merely a protection cover 468 in a half circle shape is provided at the outer side of the pedal upper sleeve 442 for the purpose of protection and anti-dust. In this case, the whole pedal structure cannot be driven by hooking upward, but only by pedaling. However, when the sleeve extension portion 443 is removed, the exerciser can ride on and off the bicycle more conveniently.

As shown in Figs. 10C to 10G, a engaging mechanism that can quickly remove and adjust the pedal 447 is further arranged on the fitness bicycle of the present invention. The detailed structure of the engaging mechanism is as below. The pedal sleeve 446 is provided with a quadrate slot 449 at its proper height, the slot shall penetrate through the walls of the pedal sleeve 446 at one side. A groove or a pushing surface 469 corresponding to the slot 449 is arranged on the threaded rod 445. Two pivot members 470 having pivot holes are arranged on the two sides of the slot 449, and a engaging member 450 is pivoted between the two pivot members. An eccentric wheel is arranged on the pivoted end of the engaging member, and the free end of the engaging member extends as a handle 451. The farthest end of the eccentrical wheel at the pivoted end engages and pushes the pushing surface 469 of the threaded rod 445 when the handle is at a proper position, locking the pedal to the threaded rod. When the handle 451 is at another proper position, the eccentric wheel of the engaging member 450 will be seprated completely from the threaded rod 445 so as to adjust the height of the pedal 447.

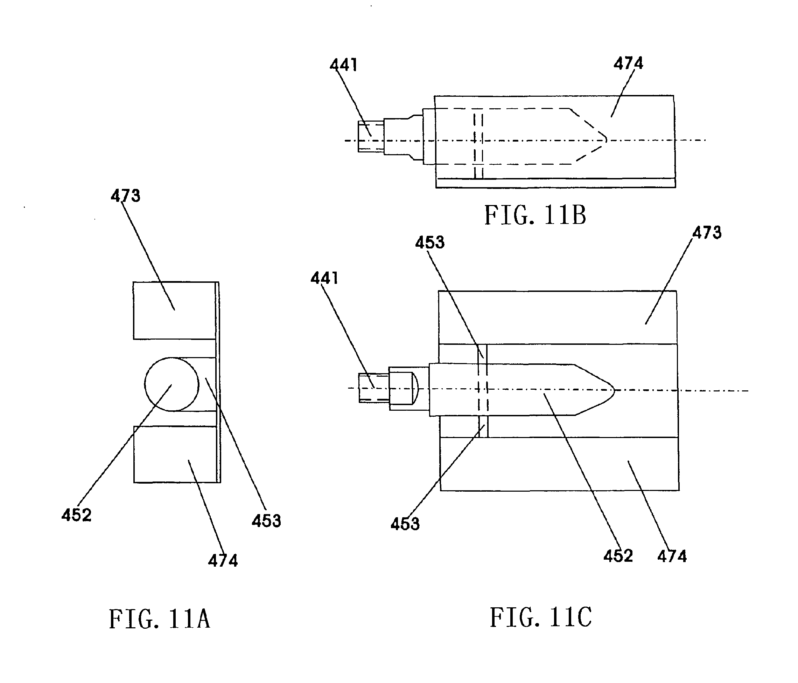

The pedal structure that can be driven around 360° on the fitness bicycle of the present invention may also be construsted as below. As shown in Figs. 11A to 11C, a hooking pin 452 having a tip at its outer end that can rotate freely around 360° is arranged on the pedal shaft 441, the hooking pin 452 at the two sides thereof is fixed with a horizontal pedal block respectively at a predetermined space via a connecting bar 453, the connecting bar 453 is merely at the inner side of the hooking pin 452. The outer end and the central portion of the hooking pin 452 and the pedal blocks can be completely opened without any connecting structure.

Since the height of the hooking pin 452 on the pedal is close to the height of the front and rear pedal blocks, the pedal structure is the same as the existing common pedal in this aspect, thus it can be used as a common pedal.

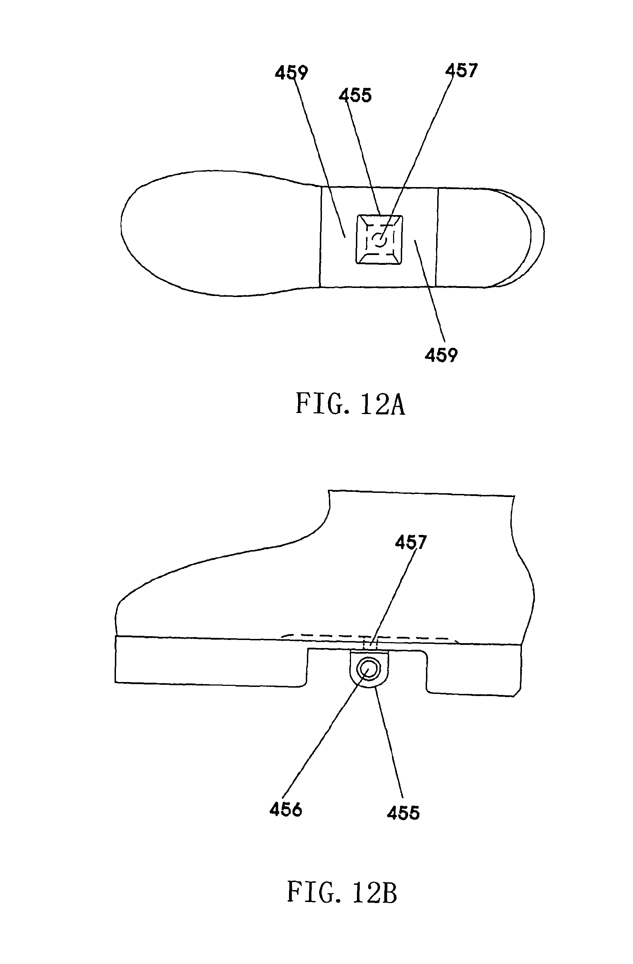

As shown in Figs. 12A and 12B, engaged with the pedal structure, a connecting member 455 with a hooking pin hole 456 is arranged under the shoe 454 close to the center of the bottom of the shoe that can pedal around 360°. The position and diameter of the hooking pin hole 456 shall be corresponding to those of the hooking pin 452 on the pedal. The whole connecting member 455 having the hooking pin hole 456 can be constructed such that it can rotate by a certain angle around its upright central axle 457, thus the shoe and the foot can have a certain free swing angle during the riding, meeting the requirement of riding comfortability. A limiting structure for limiting the rotating angle of the connecting sleeve may be arranged on the shoe bottom close to the connecting member. The portions between the front side of the connecting member 455 and the front foot bottom and between the rear side of the connecting member 455 and the heel may be formed with a predetermined concave 459 respectively. The space of the concave is engaged with the pedal block. When riding, if the hooking pin 452 is inserted transversely into the hooking pin hole 456 under the shoe, the pedal block shall be placed into the concave exactly, and when the hooking pin 452 swings a certain angle, the pedal block can still moves freely in the concave. The height of the connecting member 455 may not exceed beyond the plane of the shoe bottom.

When using the fitness bicycle, the shoe may be placed firstly downward outside the pedal, and when it steps on the pedal, the shoe is moved inwardly and transversely to let the hooking pin 452 on the pedal insert into the hooking pin hole 456. When the exerciser is skilled, the hooking pin 452 can be inserted directly into the hooking pin hole 456 from the side of the shoe.

In order to prevent the shoe from sliding transversely, the hooking pin hole 456 in the shoe may be made into a structure that can be deformed elastically. That is, the inner diameter of the hooking pin hole 456 can be enlarged and reduced at a certain degree, correspondingly, the hooking pin 452 on the pedal may also be made in such a way that its front radial size is bigger than that of its middle portion, in such case, a transverse separation force is needed to separate the hooking pin 452 from the hooking pin hole 456, ensuring the shoe having a certain stability of fastening in transverse direction.

The pedal structure can make it more convenient and feasible to convert between the multi-functional fitness bicycle and a common bicycle.

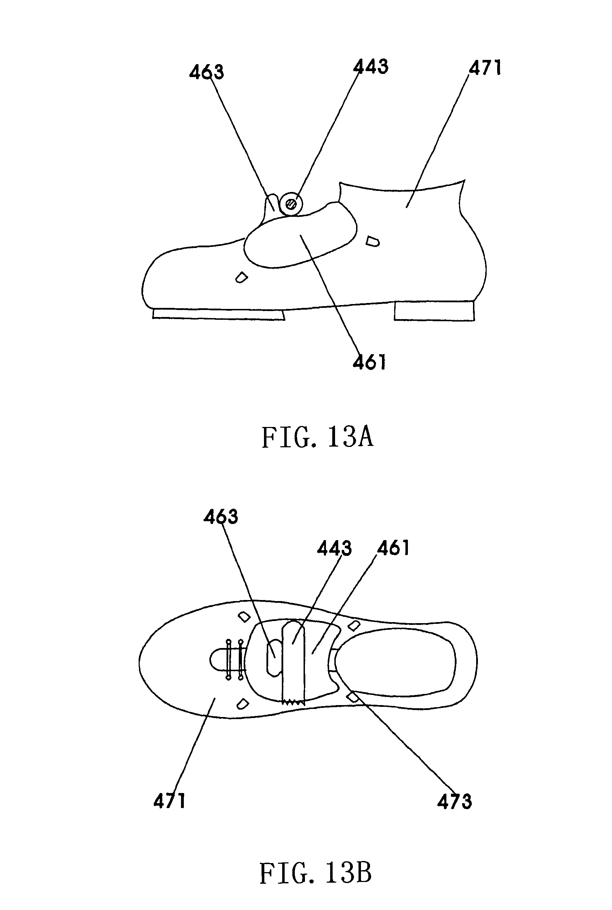

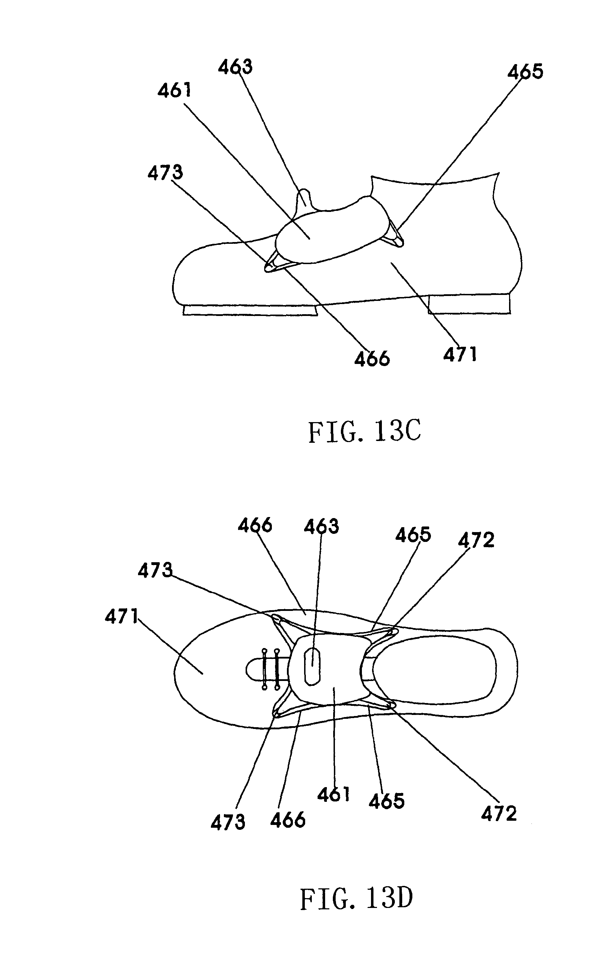

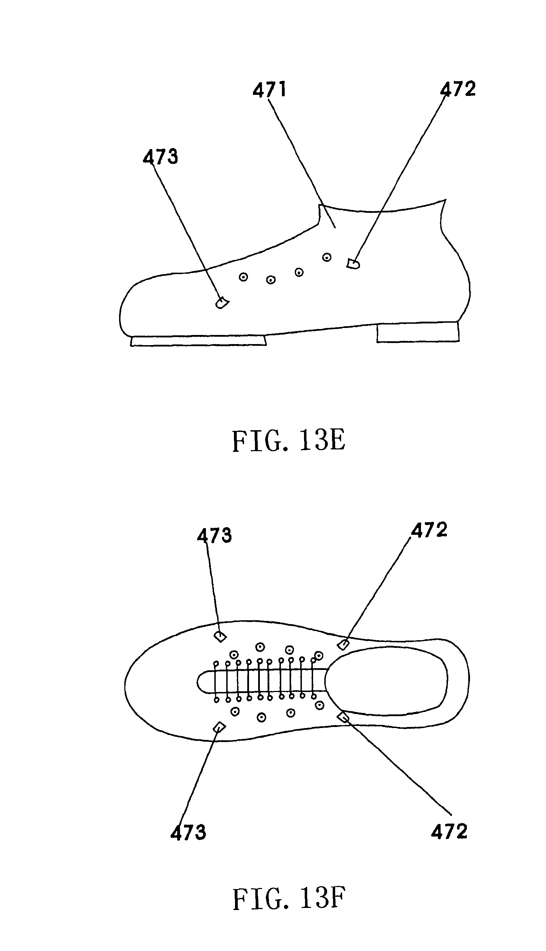

In order to allow the two feet hook and drive the pedal more conveniently in parallel or nearly in parallel when the multi-functional fitness bicycle of the present invention adopts an imitating-running structure driven by both hands and feet simultaneously, the present invention may further adopt a special sport shoe having a plurality of press buttons 460 and hooks arranged on its top and sides. As shown in Figs. 13A to 13F, a concave for limiting the sleeve extension portion from sliding forward and backward may be arranged directly on the special shoe, and an independent block 461 may also be provided thereto via the press buttons and the hooks. A blocking and driving-assistant structure is arranged on the upper front end of the independent block 461 for effectively blocking the sleeve extension portion 443 of the pedal that is driven around 360°, such that it cannot move forward. The blocking structure and other portions of the independent block 461 can form a concave. The lower layer of the independent block 461 may be made of some soft materials and the press buttons may be arranged on it so that it is convenient to connect it with the corresponding fastening structure on the special sport shoe 471. The upper portion of the blocking structure 463 may be made of a hard structure and frame so that the whole structure can transmit big driving force and is wearable.

The special sport shoe can be used in various bicycle sports. When the independent block 461 is required, it can be fastened to the sport shoe conveniently via the press buttons and hold the sleeve extension portion 443 on the pedal in its concave, thus it is more convenient to hook the pedal to drive around 360° and more effective to drive the whole fitness bicycle.

In order to fasten the independent block to the sport shoe more effectively, an inelastic and closed rear lock string 465 is provided respectively to the rear left and right of the independent block 461, and an elastic and closed front lock string 466 is provided respectively to the front left and right of the independent block 461. Firstly, the rear lock string 465 is hung on the left and right hooks 472 respectively on the rear part of the special sport shoe 471, then, the front lock string 466 is hung respectively on the left and right hooks 473 on the front part of the special sport shoe 471. Meanwhile, the upper and lower press buttons on the sport shoe and the independent block 461 can be fastened together, thus the entire independent block can be well connected to the special sport shoe 471.

In order to achieve the fastening object, Velcro fasteners that are widely used on common shoes may be used independently or jointly with the press buttons at corresponding position under the independent block 461 and on the sport shoe.

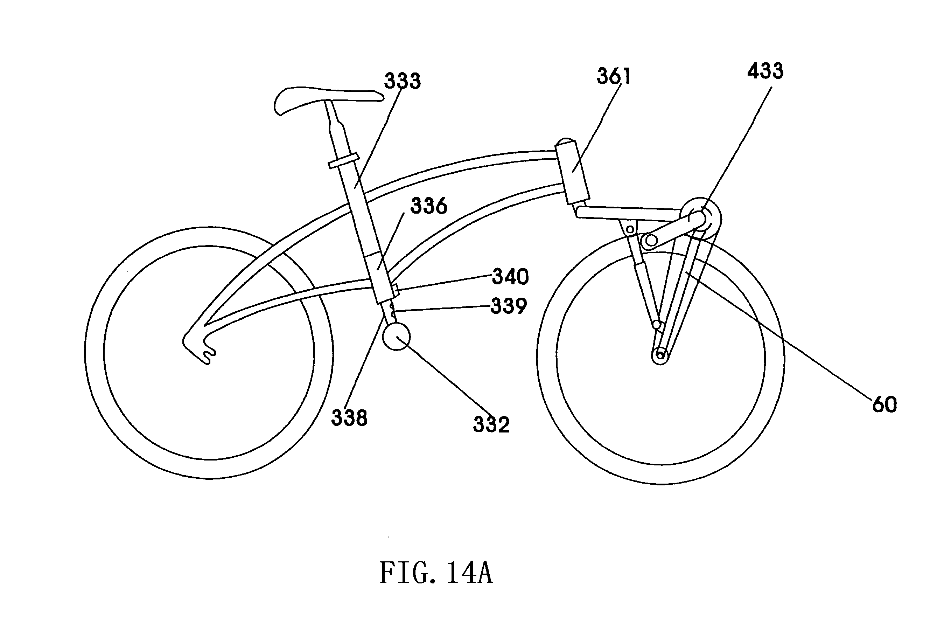

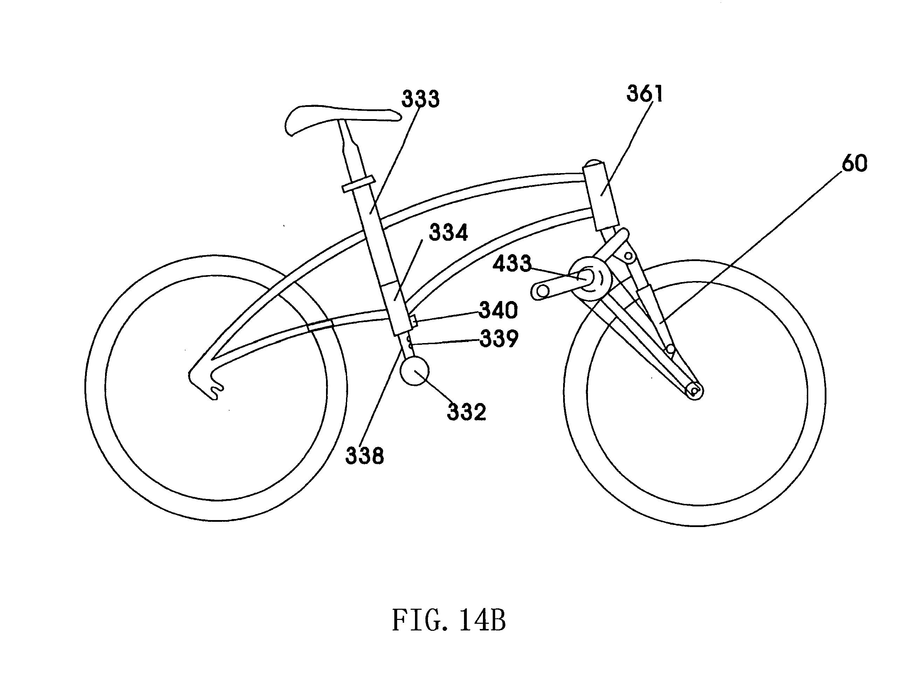

The height of the foot drive axle seat 332 of the fitness bicycle can be adjusted, which may be constructed as below. A second engaging tube 338 that can only be inserted into the first engaging tube at the lower portion of the central upright tube 333 may be arranged on the top of the foot drive axle seat 332. As shown in Figs. 14A and 14B, a plurality of five-way adjusting holes 339 are further arranged on the second engaging tube 338, a frame fixing hole having thread and a corresponding securing bolt 340 may be arranged on the first engaging tube 334 at the lower portion of the central upright tube 333. According to actual requirement, the foot drive axle seat 332 can be adjusted upward or downward to a proper height and then the securing bolt outside the first engaging tube 334 at the lower portion of the central upright tube 333 is locked to the corresponding five-way adjusting hole 339 so as to lock the second engaging tube 338, the foot drive axle seat 332, the pedals, the middle axle, and the drive chainwheel to the desired height, thus all the previous described pedals are at a necessary height above the ground.

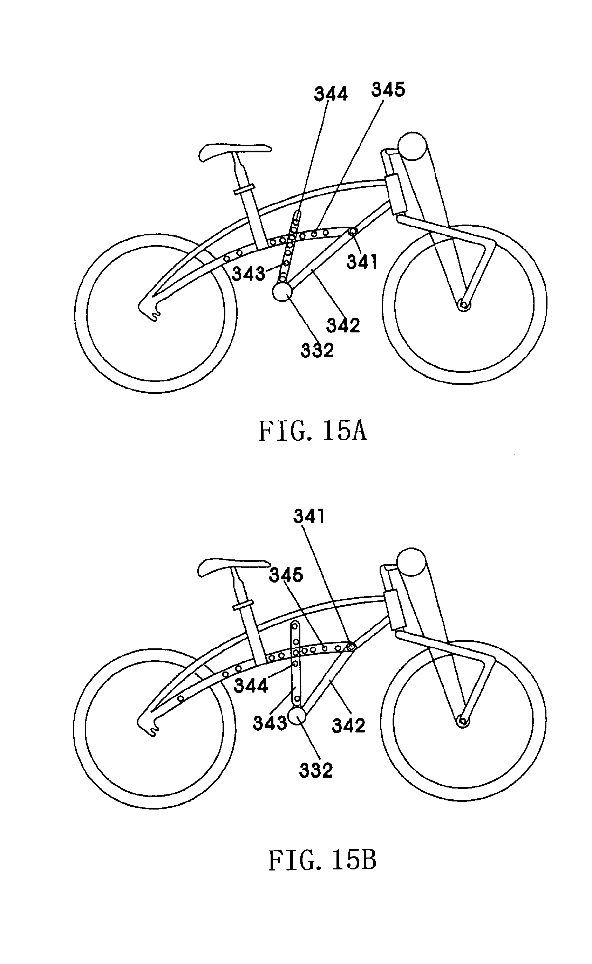

The frame with the height of the foot drive axle seat 332 adjustable may also be constructed as below. As shown in Figs. 15A to 15D, a swinging axle and axle seat 341 is arranged at a proper position on the front lower slope tube, the upper front end of the foot drive axle seat 332 is connected to a second regulating rod 342, the second regulating rod 342, at the rear end thereof, is fixed to and integrated with the foot drive axle seat 332 and the second regulating rod 342, at the front end thereof, is provided with a structure that is hinged to the swinging axle and axle seat 341. The foot drive axle seat 332 and the second regulating rod 342 can swing, rotate, and move up and down together around the swinging axle and axle seat 341. A first regulating rod 343 is arranged above the foot drive axle seat 332, the lower end of the first regulating rod 343 is hinged to the foot drive axle seat 332, and a plurality of first regulating holes 344 at different heights are arranged on its upper portion. By connecting different first regulating holes 344 to the fixing hole 345 in the frame, the foot drive axle seat 332, can be adjusted within a corresponding range, and can be locked to different heights. A plurality of the fixing holes 345 may be formed in the frame for option. The length of the second regulating rod 342 and the first regulating rod 343 may be adjustable, as shown in Figs. 15A and 15B.

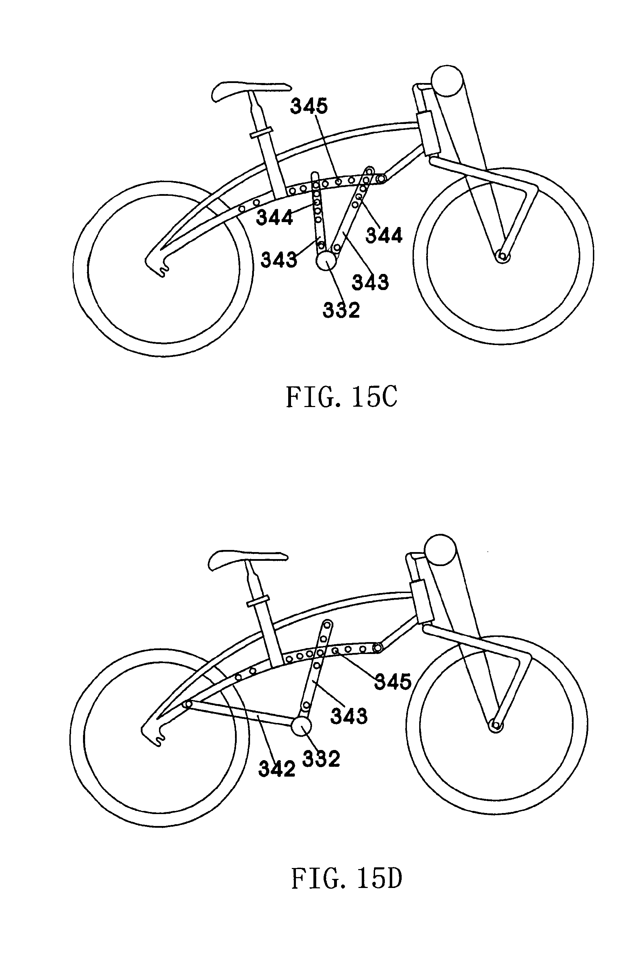

As shown in Fig. 15D, similar to the previously described structure, the second regulating rod 342 on the foot drive axle seat 332 may also be arranged backward, the other end of the second regulating rod 342 may also be hinged to a place on the rear frame, even to the position where the rear wheel axle is fixed. In this case, a first regulating rod 343 having a structure and function completely identical to the previously described one is also arranged above the foot drive axle seat 332.

As shown in Fig. 15C, according to actual requirement, the foot drive axle seat 332 may also be hinged with two first regulating rods having their length adjustable and the other ends hinged optionally to different fixing holes 345 in the frame so that the foot drive middle axle can be adjusted within a certain range of height.

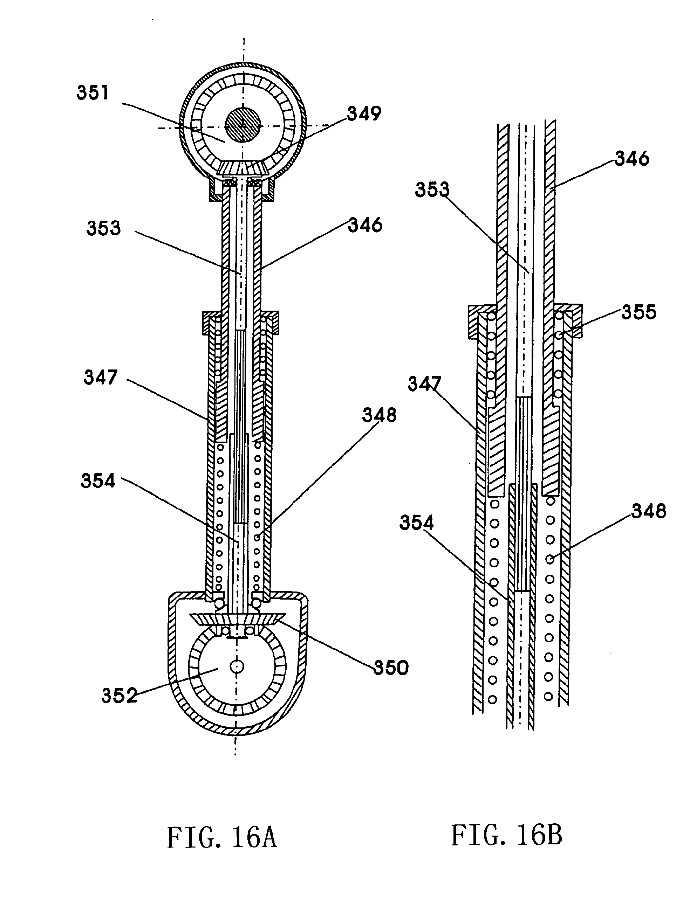

A front wheel damping system imbedded with a transmission axle is further arranged on the multi-functional fitness bicycle of the present invention for adapting to the riding on an uneven road, the structure of the damping system is as below. As shown in Figs. 16A and 16B, the imbedded transmission axle is arranged in a sleeve structure between the hand drive chainwheel 991 and the front wheel axle. The sleeve structure comprises a hollow inner guide sleeve 346 of the damper and an outer guide sleeve 347 of the damper thereunder, the outer guide sleeve encircles the inner guide sleeve. A damping spring 348 is arranged in the guide sleeves, and the transmission axle is also arranged therein. The transmission axle comprises an upper axle tube and a lower axle tube that are axially connected by insertion and can only move relatively along the axial direction. A first conical gear 349 and a second conical gear 350 are arranged on the top and at the bottom of the transmission axle, the first conical gear and the second conical gear are respectively engaged with the hand drive gear 351 (the third conical gear) and a fourth conical gear 352 on the front wheel axle. The upper axle tube 353 and the lower axle tube 354 of the transmission axle can either be engaged via a spline, or by other methods, ensuring the upper axle tube 353 and the lower axle tube 354 not only can transmit torque reliably and effectively, but also can move relatively within a certain range. The lower portion of the hollow inner guide sleeve 346 of the damper may be properly enlarged, which engages with the limiting cover on the outer guide sleeve 347 and the damping spring 355 therebetween. This can not only limit the maximum axial extension (separation) displacement between the upper and lower guide sleeves, but also can ensure a necessary damping range during the extension of the damper, increasing the damping effect of the whole damper.

The damping system imbedded with a transmission axle of the present invention may also adopt a spring-air damping structure and a spring-hydraulic damping structure, their detailed structures can be as below:

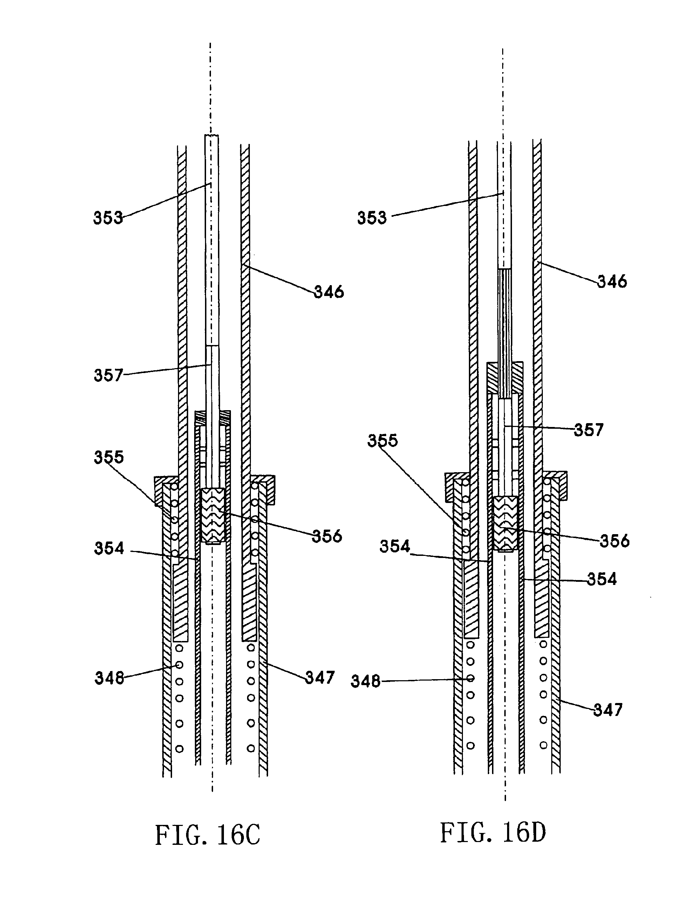

As shown in Figs. 16C and 16D, a piston structure 356 is arranged at the lowest end of the upper axle tube 353 and correspondingly a piston tube is arranged on the lower axle tube 354 (in the spring-air damping structure) or a hydraulic cylinder (in the spring-hydraulic damping structure), a blocking section 357 with a smooth surface is provided above the piston structure 356 for effectively blocking the air or hydraulic oil when it engages with corresponding structures on the piston tube or the hydraulic cylinder. The cross-section of the blocking section 357 is square, hexagonal or elliptical. The blocking section can also transmit rotating torque to the piston tube or the cylinder (the lower axle tube) while blocking the air or oil. When the cross section of the blocking section 357 is round, a spline that can effectively transmit torque shall be particularly arranged on the blocking section, and correspondingly, a torque transmission sleeve with a structure corresponding to the shape of the splines shall also be arranged on the top of the piston tube or the cylinder.

The damping effect of the whole damping system will be more perfect by adopting the previously described structure. The working principle of the damping system is same as the ordinary damper in spring-air damping structure or in spring-hydraulic structure, except the arrangement of an independent hollow inner guide sleeve 346 and an outer guide sleeve 347 of the damper and a limiting cover for ensuring that the whole damping system always moves along the axial direction of the upper and lower axle tubes 353 and 354 when being extended or withdrawn. Meanwhile, a damping spring 355 may further be provided into the structure. The whole torque transmission process of the damping system in this structure is basically identical to the damping system merely having springs.

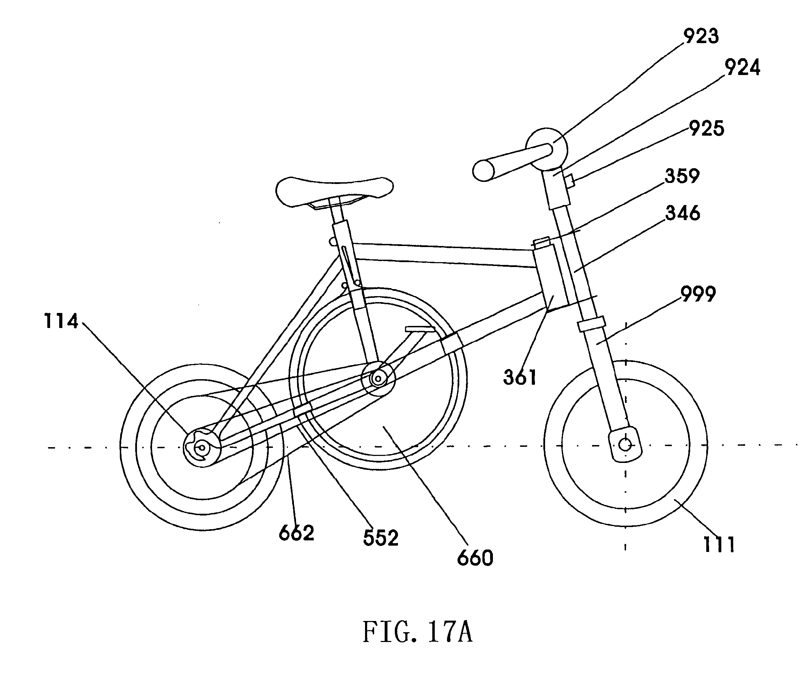

On the multi-functional fitness bicycle of the present invention, in order to move the front drive rocker arm system up and down within a certain range, a structure that can move up and down and is lockable may be arranged on the portion of the inner guide sleeve of the front damper above the connecting board, the detailed structure is as below. As shown in Fig. 17A, two regulating and connecting sleeves with their inner holes exactly having the same diameter as the outer diameter of the hollow inner guide sleeve 346 of the damper and being perfectly engaged onto the two inner guide sleeves 346 may be fixedly arranged under the seat of the front drive rocker arm system. A threaded locking hole and a nut 924 are arranged on each of the regulating and connecting sleeves, and correspondingly, a plurality of securing concaves are arranged up and down at corresponding position on each inner guide sleeve. The exerciser can adjust the fixing seat 923 of the whole front drive rocker arm system to a desired height, then tighten the nuts 924 on the two regulating and connecting sleeves, and lock the nuts into the corresponding securing concaves on the inner guide sleeves, thus the whole front drive rocker arm system is locked to the desired height. Meanwhile, the upper axle tube 353 of the hand-driving force transmission axle in the inner guide sleeve 346 also moves up and down along its axial direction, but it can be always effectively coupled with the lower axle tube 354.

According to actual requirement, when the hand drive torque transmission system adopted on the fitness bicycle of the present invention is not coupled with the damper in the previously described method, it may also be arranged outside the damper independently or coupled in the front fork upright tube without a damper.

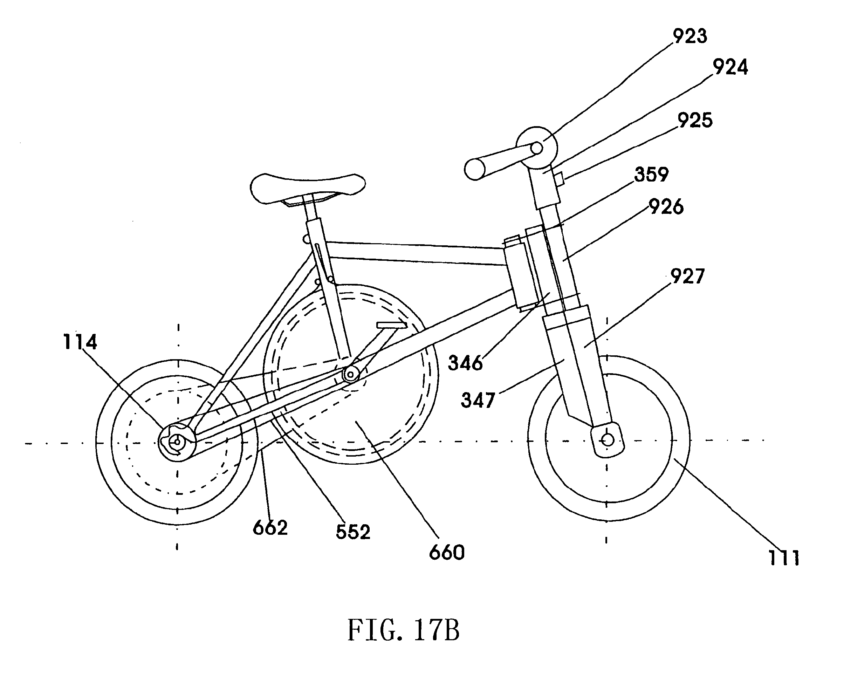

As shown in Fig. 17B, the front drive axle system of the multi-functional fitness bicycle of the present invention may also be arranged outside the front damping system, i.e., it is independently arranged before, after or on the side of the inner and outer guide sleeves 346 and 347 of the front damping system, but the axis of the front drive axle shall be in parallel with the axis along which the inner and outer guide sleeves 346 and 347 of the front damping system move up and down, ensuring that the damping process does not contradict with the torque transmission process. Upper and lower protective sleeves 926 and 927 may (shall) be further arranged outside the front drive axle and the drive sleeve 38 thereunder. The upper and lower protective sleeves 926 and 927 are integrated respectively with the upper inner guide sleeve 34 and the lower outer guide sleeve 35 of the front damper. When adopting the structure, the regulating and connecting sleeve 925 under the fixing seat 923 of the front drive rocker arm system can be engaged and locked with the upper protective sleeve 926. The engaging and locking method is similar to that of the damper imbedded with the transmission axle.

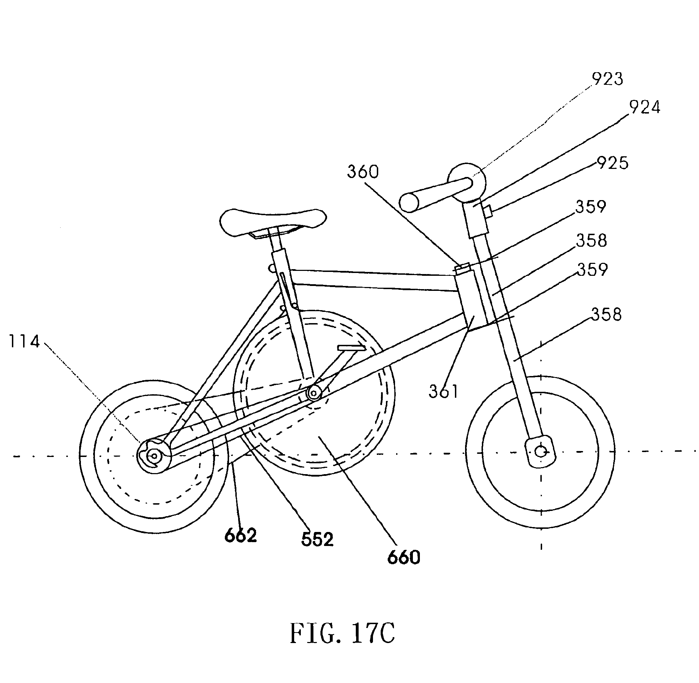

When the multi-functional fitness bicycle of the present invention merely adopts a structure of transmitting the hand driving torque through an axle at its front instead of the damping structure, the whole structure can be simplified as below. As shown in Fig. 17C, the two front fork upright tubes 358 function as front forks and protective sleeves, the top of the two front fork upright tubes 358 can be engaged and connected with a front turning tube 361 of the frame via a connecting plate 359 and a front turning axle 360, and the bottom of the front fork upright tubes is coupled with the front wheel axle. The longitudinal central line of the front fork upright tubes shall intersect the axis of the front wheel axle. The front drive transmission axle is placed inside the front fork upright tubes. In order to adjust the height of the whole front drive rocker arm system, the front drive transmission axle may also be comprised of upper and lower parts. Similar to the previously described structure, the regulating and connecting sleeve 925 under the whole front drive rocker arm system can be engaged with the top of the front fork upright tubes 358 and can be adjusted.

The front drive rocker arm system of the multi-functional fitness bicycle of the present invention may also be arranged in front, lower front or lower back side of the front fork upright tube 361. As shown in Fig. 14A, when the front rocker arm system is arranged at a proper position in lower front side of the front fork upright tube 361 while considering providing a front wheel damping system, an arranging method of enabling the axial center of the front rocker arm axle 43 coinciding with the swinging center of a lower arm 60 of the front damping system may be adopted, thus when transmitting the front driving force via a chain, the position of the drive chain and the angle of the drive rocker arm will not be affected and changed due to the swinging of the lower arm during the damping process. Hence the hands and feet are always at optimum working positions.

As shown in Fig. 14B, when the front rocker arm system is arranged at a proper position in the lower back side of the front fork upright tube 361 while considering providing a front wheel damping system, the axial center of the front rocker arm axle 433 shall also coincide with the swinging center of the lower arm 60 of the front damping system, ensuring that the driving positions of the hands and feet are always in concordance.

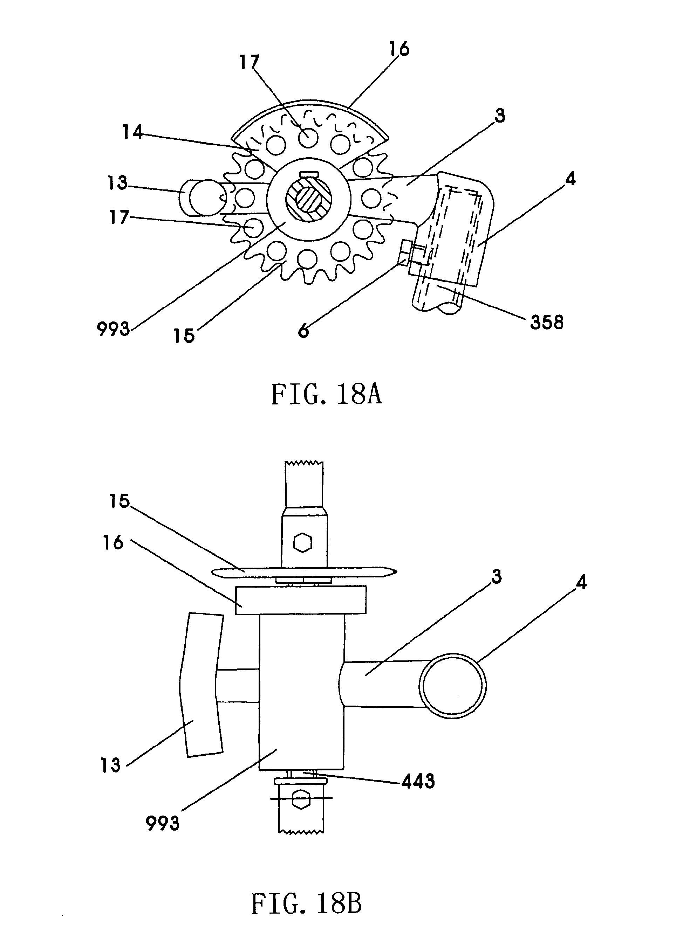

As shown in Figs. 18A and 18B, the front drive axle seat 993 on the front drive rocker arm system can be welded to the axle seat upright tube 4 via a connecting structure 3. The inner side of the axle seat upright tube 4 may be threaded, and the inner thread is engaged with the outer thread of the upright tube 358 at the upper end of the front fork, thus the axle seat upright tube 4 can be screwed into the upper tube 358 above the front fork, and the axle seat upright tube 4, the axle seat 2 are locked to a desired height on the front fork upright tube 358 via a securing bolt 6 on the axle seat upright tube 4 and a key slot in the upper tube 358 above the front fork.

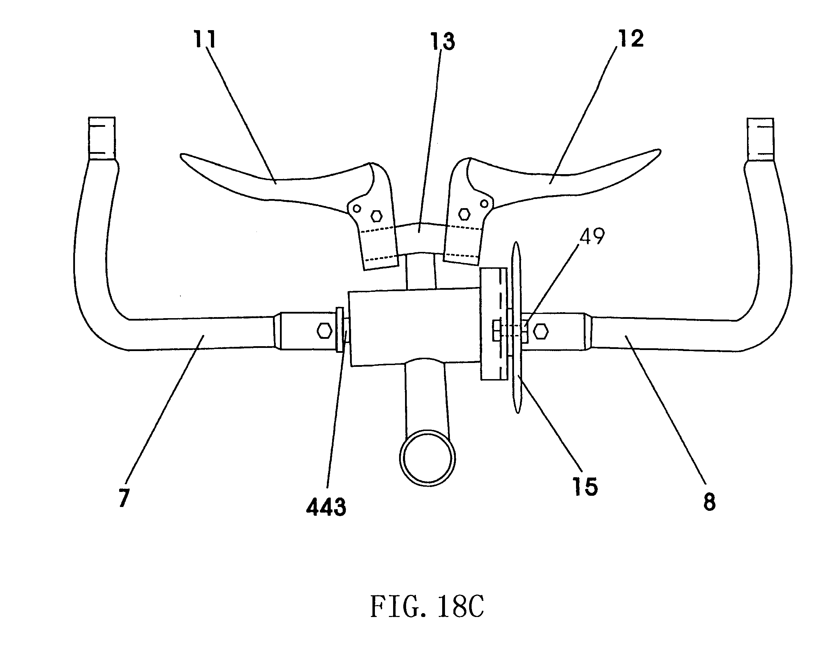

As shown in Figs. 18A and 18C, a handle connecting tube 13 that can engage the front and rear brake handles 11 and 12 thereon may be arranged on the front drive axle seat 993 on its front side. A protective and connecting structure may be arranged on the top of the axle seat 993, the protective and connecting structure may be provided at the lower portion thereof with a upright plate 14, and at the upper portion thereof with a protective curve plate 16 for protecting the exerciser from being hurt by the front drive chainwheel 15. Both the upright plate 14 and the front drive chainwheel 15 may be provided with a plurality of connecting holes 17. The front drive chainwheel 15 can be locked to the upright plate 14 via these holes, bolts and nuts, and the left and right front drive rocker arms 7 and 8 fixed to the front drive chainwheel 15 can be located at a desired angle and position, satisfying demands of exercisers when using the bicycle.

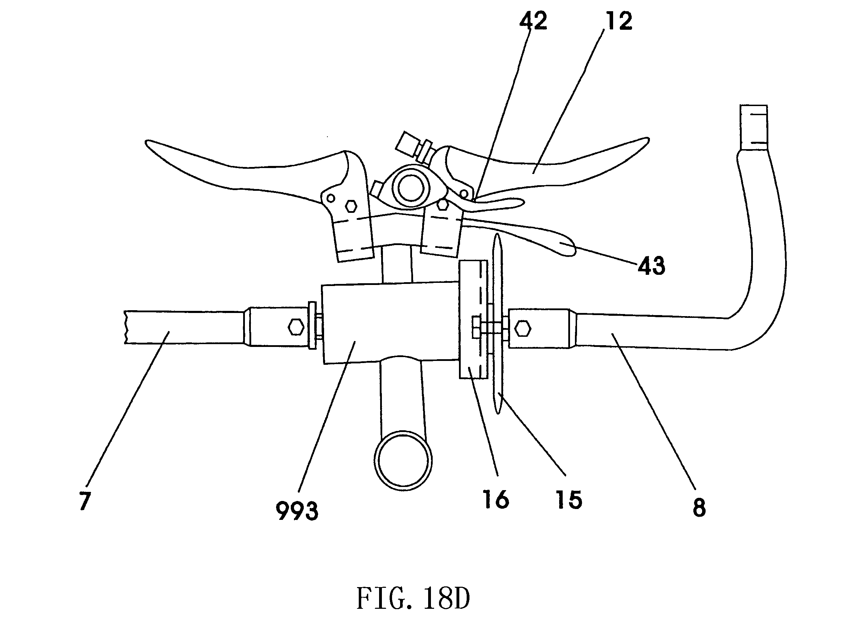

As shown in Fig. 18D, a system integrating a brake handle with a speed control handle may be arranged in front of the front drive axle seat 993 of the fitness bicycle of the present invention, the detailed structure of the system is as below. When a structure of rotating the upper control handle 42 and controlling the steel wire by drawing back the upper control handle 42 with the forefinger is adopted, a structure of rotating the lower control handle 43 and controlling the steel wire by pushing the lower control handle 43 forward and outward with the back of the forefinger, middle finger or the third finger may also be adopted. The lower control handle 43 may be longer, and its whole shape shall be such that it enables the finger at its inner side to push the contact surface, is adaptive for the back of the finger to push, and can prevent the lower control handle 43 from being contacted and collided with the front drive chainwheel 15, the front drive rocker arm 8 and the front protective curve plate 16. The length and shape of the upper control handle 42 shall also be considered accordingly. The upper and lower control handles 42 and 43 and other relevant structures may either be independently constructed, or combined with the front and rear brake handles 11 and 12 to form a compact product having combined functions.

The multi-functional fitness bicycle of the present invention may further adopt a two-position (multi-position) linkage brake system, the detailed structure of the brake system is as below. Left and right brake handles 997 and 998 that can rotate with the drive handles 995 and 996 may be arranged on the drive handles 995 and 996 on the rotatable left and right hand drive rocker arms. When the brake handles are pressed, the push points 78 thereon that protrude outwardly will push the driving discs 901 and 902 on the shafts 79 and 80 of the rocker arm drive handles to slide along the axis, and the driving discs 901 and 902 will pull the brake transmission steel wires 83 and 84 respectively to displace accordingly. Most part of the brake steel wires 83 and 84 are in the drive tubes for the left and right drive rocker arms 85 and 86 respectively. When displacing, the other ends of the brake steel wires pull simultaneously and respectively brake sliders 87 and 88 each having a round brake disc close to the central portion of the whole rocker arm to move them transversely. When braking, no matter how the front drive rocker arm rotates, the driven discs 903 and 904 on the brake sliders always push respectively push arms 92 and 93 at the outer side of the left and right forcipate brake arms on the front drive axle seat 993 so as to bring a pull arms 905 at the inner side of the left and right forcipate brake arms to rotate together. The pull arms 905 at the inner side pull respectively the brake steel wires 98 and 99 to move the steel wires, and finally moving the front and rear brake system to realize a braking process.

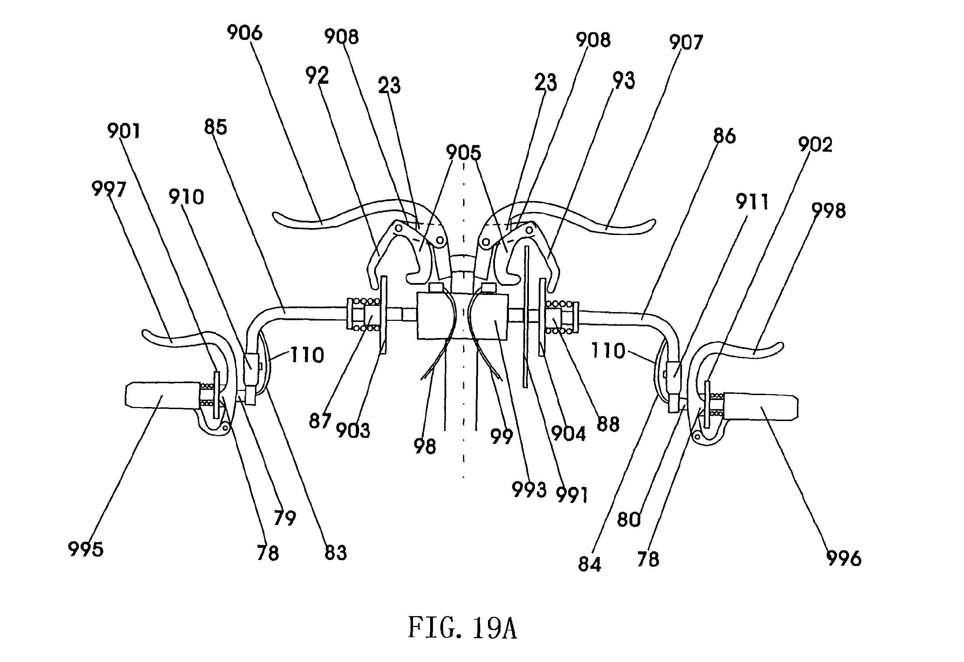

As shown in Fig. 19A, a structural surface 908 that can be pushed may also be arranged outside the pull arm 905 at the inner side of the left and right forcipate brake arms of the brake system of the fitness bicycle. Corresponding projection may be arranged respectively in a proper position on the inner periphery of the left and right brake handles 906 and 907 fixed on the front drive axle seat 993 for pushing the structural surface 908. Hence, it is convenient to rotate directly the front brake handles 906 and 907 inwardly when the two hands hold the straight shaft portion of the drive rocker arms, and push respectively the structural surfaces 908 of the left and right forcipate brake arms at their inner side via the projections 23 so as to rotate the inner left and right brake pull arms 905 to move the front and rear steel wires, achieving a corresponding braking process. A locking pin may be arranged on the end of the pull arm 905 on the right forcipate brake arm, and correspondingly, a plurality of locking holes may be arranged on the hand drive chainwheel 991 along its circumference with equal radius. When the right brake handle is pressed, the right forcipate brake arm rotates, and the locking pin thereon will be quickly inserted into the locking holes in the hand drive chainwheel 991 so as to lock the hand drive chainwheel 991 and the whole brake rocker arm system to a certain position, thus it is more convenient to control the whole bicycle when braking.

The locking pin on the forcipate brake arm may be modified to another structure that performs locking by its friction force, and corresponding brake structures may be arranged on the hand drive chainwheel 991.

A structure that can lock the whole drive rocker arm to a desired angular position via locking holes on the hand drive chainwheel 991 may be specifically arranged on the front drive axle seat 993. The structure may be the forgoing locking pin or other structures that can conveniently and automatically lock the drive rocker arm.

According to actual requirement, the left and right drive handles 995 and 996 under the left and right drive rocker arm system of the multi-functional fitness bicycle of the present invention and the brake handles 997 and 998 thereabove can rotate respectively with the left and right adjustable tubes 910 and 911 on the lower ends of the left and right rocker arms by 180° from its outer side toward the inner side, and then they are fixed together to the left and right rocker arms respectively, thus the width of the whole rocker arm system is reduced significantly and the bicycle will be more flexible to pass through a road. Certainly, when it needs to use the front rocker arm system for driving, rotate the adjustable tubes 910 and 911 of the drive handles 995 and 996 in an reverse direction by 180°, and then fix them, resuming the drivable state of the rocker arm system.

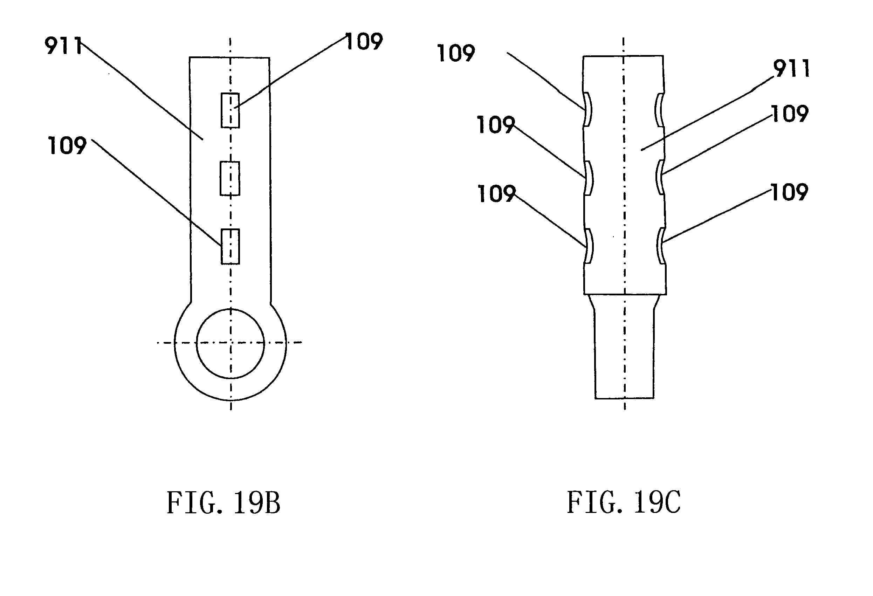

The detailed structure for carrying out the previously described process is as below. As shown in Figs. 19B and 19C, two rows of longitudinally distributed locking holes 109 may be formed symmetrically at 180° on the left and right adjustable tubes 910 and 911, and left and right locking pins 110 corresponding to the locking holes 109 may be arranged at the lower end of the left and right rocker arm tubes. An elastic member is arranged inside the locking pin 110, which can be pressed down and can be automatically returned back. The locking pin can be locked in the locking holes 109 in the adjustable tubes 910 and 911, thus the left and right adjustable tubes 910 and 911 can be well locked respectively to the left and right rocker arms at two working positions differing in 180°. Moreover, the drive torque of the left and right rocker arm system can be adjusted and changed by fixing to the locking holes 109 at different heights. At least two locking holes that are symmetrically distributed at 180° may be arranged respectively on the adjustable tubes.

According to actual requirement, the whole front drive rocker arm system of the present invention may be removed from the front fork upright tube, and common bicycle handles in other shapes or other required structure may be installed thereon instead. However, the rear (lower) end of the handles to be installed must be able to be engaged with the connecting portion of the front fork upper upright tube. A locking bolt may be arranged on the connecting tube at the upper end of the front fork upper upright tube so that the whole handle can be locked to the front fork upper upright tube.

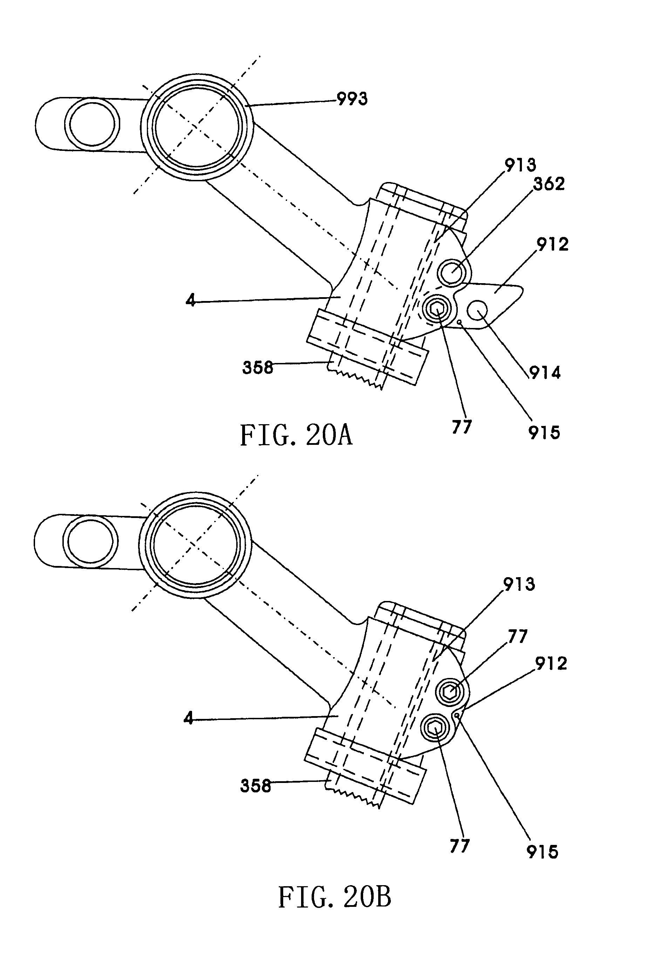

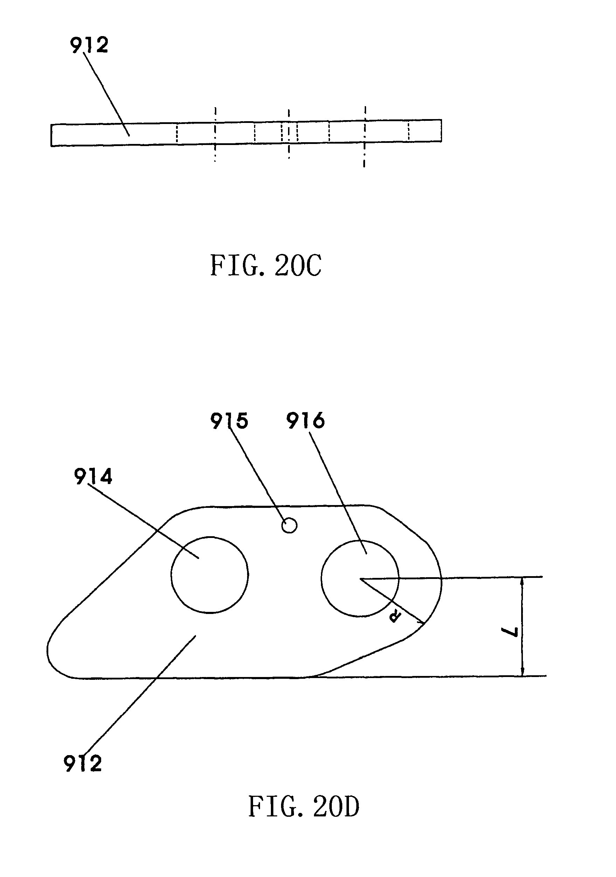

The front drive axle seat assembly system of the multi-functional fitness bicycle of the present invention may be fixed by a locking plate engaged with a groove. As shown in Figs. 20A to 20D, a locking groove (key groove), i.e., a slide-proof groove 913, may be provided on the outer periphery behind the axis of the upper portion of the front fork upright tube 358 in the direction parallel to the axis, meanwhile, an opening is formed on the rear end of the lock tube of the axle seat assembly, a slide plate 912 may be inserted into the opening and the groove 913, locking the whole front drive axle seat with the front fork upright tube together.

The detailed structure of the slide-proof plate 912 may be as below. The slide-proof plate 912 is formed with two or more structural holes 914, its one side is straight, and the thickness of the straight side is the same as (close to) the width of the slide-proof groove 913 on the front fork upright tube so that it can be locked well in the slide-proof groove 913. The distance from the outermost edge of the slide-proof plate to the structural hole 914 shall be corresponding to and close to the distance from the center of the threaded locking hole 362 at the rear end of the lock tube of the front drive axle seat to the inner bottom of the key groove at the rear end of the front fork upright tube. The bottom edge of the slide-proof plate 912 may be formed in an arcurate shape with the center of the downmost structural hole 914 as its circle center, and the radius R of the arc is equal to or slightly less than the distance from the center of the structural hole 914 to the straight side of the slide-proof plate.

The outer side of the slide-proof plate 912 may also be straight, and a small hole 915 for assembly and disassembly may be formed adjacent to the central portion of the outer straight side. When assembling, the lower structural hole 914 is aligned with the threaded locking hole under the lower back end of the axle seat lock tube, and the inner straight side of the slide-proof plate 912 is fixed to a position where functions for locking later, and then, a corresponding bolt is screwed into the threaded locking hole and the corresponding structural hole 914. And then, the slide-proof plate 912 can be rotated upward around the bolt 77 until its inner straight side is completely locked with the slide-proof groove 913 at the upper and rear ends of the front fork upright tube. In this case, the upper structural hole 914 of the slide-proof plate 912 is aligned with the threaded locking hole 362 on the rear end of the axle seat lock tube, and another bolt 77 may be screwed into the aligned hole 362 and the structural hole 914 and be tightened, thus the slide-proof plate 912 can lock the whole front drive axle seat system with the front fork upright tube well. In this case, the small hole 915 on the slide-proof plate 912 for assembly and disassembly is exposed to the outside.

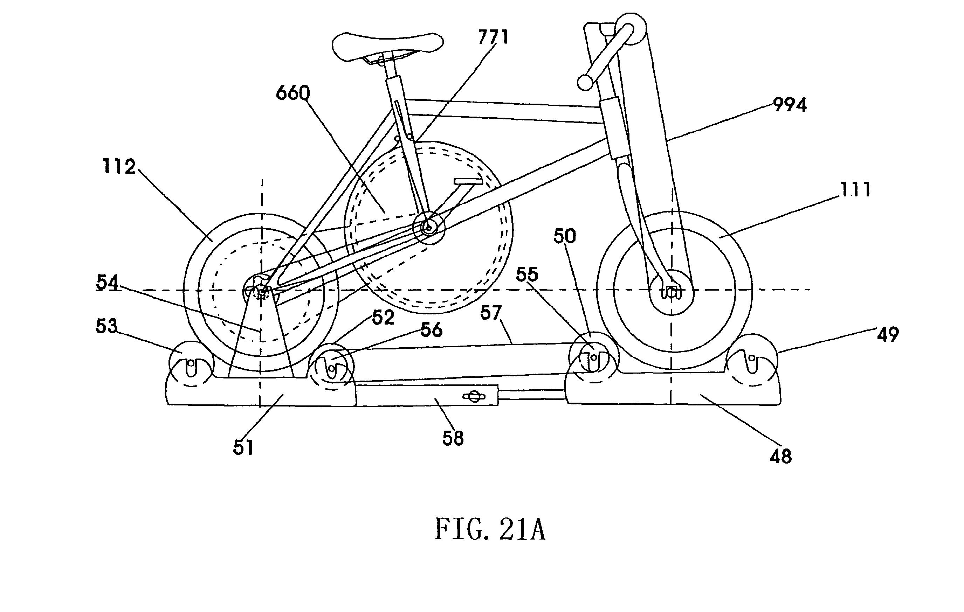

In order to enable the multi-functional fitness bicycle of the present invention to be more practical, a support structure that can completely fix the fitness bicycle may be considered. The structure may comprise a front wheel support portion, a rear wheel support portion and a middle structural portion. As shown in Fig. 21A, two front guide wheels 49 and 50 are arranged on the front wheel connecting frame 48 with a certain distance spaced apart from each other, and two rear guide wheels 52 and 53 are arranged on the rear wheel connecting frame 51 with a certain distance spaced apart from each other, meanwhile, a rear wheel support bracket 54 that can adjust the height of the rear wheel of the bicycle is arranged thereon. A front chainwheel 55 may be provided to the front guide wheel 50 or its rotating central axle, and a rear chainwheel 56 having the same number of teeth as the front chainwheel 55 may be provided to the rear guide wheel 52 or its rotating central axle. A chain 57 having a tension wheel may be arranged between the front and rear chainwheels, and a middle support structure 58 with its length adjustable may be arranged between the front and rear frames 48 and 51. The front chainwheel 55, the rear chainwheel 56 and the chain 57 may be substituted by gears and a transmission axle.

When using the support structure, the length of the middle connecting structure 58 shall be adjusted and fixed according to the distance between the axle centers of the front and rear wheels of the fitness bicycle of the present invention so that the front and rear wheels are positioned respectively on the two front guide wheels 49 and 50 and the two rear guide wheels 52 and 53 and in good contact. In this case, the rear wheel axle shall be able to be fixed by the rear wheel support bracket 54, thus the whole fitness bicycle is fixed to its due position. When the exerciser rides on the fitness bicycle and drives the front and rear wheels with hands and feet, the hand drive torque will be transmitted to the front wheel 111 via the front drive chain 994 or the transmission axle, meanwhile, the front wheel 111 will also transmit the drive torque to the front guide wheels 49 and 50, and the front guide wheel 50 will in turn transmit the front drive torque along the direction from the front chainwheel 55 or gear to the middle transmission chain 57 or the transmission axle, to the rear chainwheel 56 or gear, to the rear guide wheel 52, to the rear wheel 112, and finally to the inertial energy storage wheel 660 via the drive chain. Meanwhile, along the reverse direction, the kinetic resistance provided by the damping belt 771 will be transmitted to the arms and legs to let them receive the corresponding kinetic resistance, achieving the object of performing exercises by using the multi-functional fitness bicycle in a stationary position.

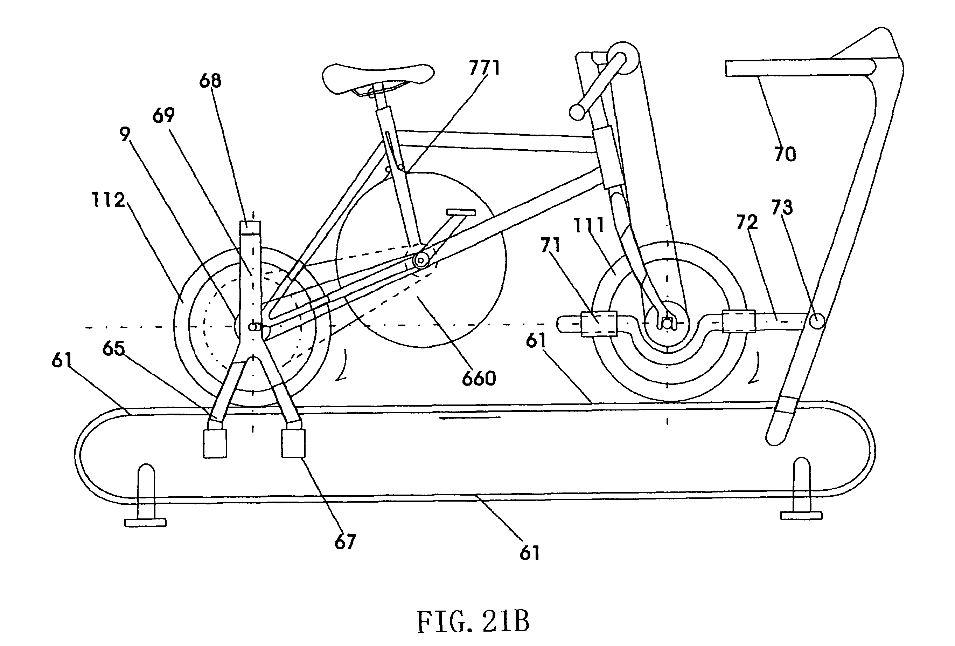

When the multi-functional fitness bicycle of the present invention is used in a stationary position, the support structure to be engaged therewith may also adopt a structure similar to a running machine. As shown in Fig. 21 B, the fitness bicycle may be fixed to a running belt 61 of a running machine. Both the front and rear wheels of the bicycle are in sufficient contact with the running belt 61, meanwhile, the front and rear wheels and the arrangement of the whole bicycle are always in parallel with the moving direction of the running belt 61, thus hand and foot driving force can be transmitted to the inertial energy storage wheel 660 via the running belt 61 when the exerciser is exercising on the bicycle.Accordingly, the kinetic resistance provided by the damping belt 771 on the inertial energy storage wheel 660 is transmitted to hands and legs via the running belt 61, thus the exerciser can experience the moving load, achieving the object of exercising. The support structure for stationary exercises that transmits directly the driving force and resistance via the running belt is simplified in structure, meanwhile, the running-belt-type support structure can also have the function of enabling the exerciser to perform running exercises on it.

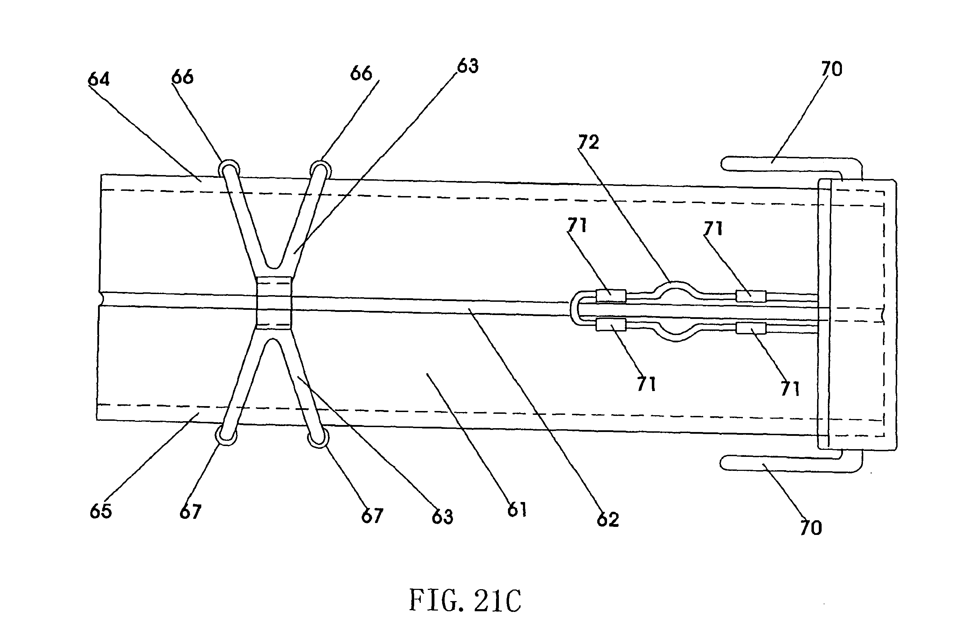

The detailed structure of the running-belt-type or running-machine-type support structure may be as below. The portions of the belt 61 that are in direct contact with the front and rear wheels 111 and 112 and repeatedly rolled on and pressed by the front and rear wheels may be designed as a concave running track 62 having a certain size of cross-sectional area. As shown in Fig. 21C, the strength of the concave running track 62 that is in parallel with the moving direction of the running belt and is longitudinally arranged can be intensified independently. On the other hand, the concave structure can better limit the front and rear wheels (especially the front wheel) of the bicycle and orient them into the concave track 62, thus the moving direction of the bicycle is always consistent with the running track 62 and the moving direction of the running belt.

A rear wheel support bracket 54 that can be conveniently assembled and disassembled to the whole support structure may be arranged on the running-belt-type support structure. The lower ends of the left and right portions of the rear wheel support bracket 54 may be inserted respectively into the slots 66 and 67 in the frames 64 and 65 on left and right sides of the running machine, the middle and the upper potions of the connecting frame can be constituted by left and right intermediate upright plates. Concaves that can clamp the rear wheel axle is arranged symmetrically and horizontally or at a certain downward angle at a proper height of the left and right intermediate upright plates. This can effectively and conveniently lock the rear wheel and the whole fitness bicycle.

In order to better locate and control the front wheel of the fitness bicycle having the function of front wheel drive, handrails 70 may be arranged on the running-machine-type support system. A guide and control bracket 72 of the front wheel is arranged on the front frame of the running machine, the left and right sides of the guide and control bracket 72 that are placed horizontally are arranged respectively with two guide wheels 71. The four guide wheels 71 clamp and control the front wheel tire along the horizontal direction (select to contact or not contact according to different requirement), thus the operation of the whole stationary multi-functional fitness bicycle is more stable and reliable. When they are not used, the guide and control bracket 72 of the front wheel can be lifted around the rotating axle at the front side of it so as to rest on other front frame structure of the running machine.

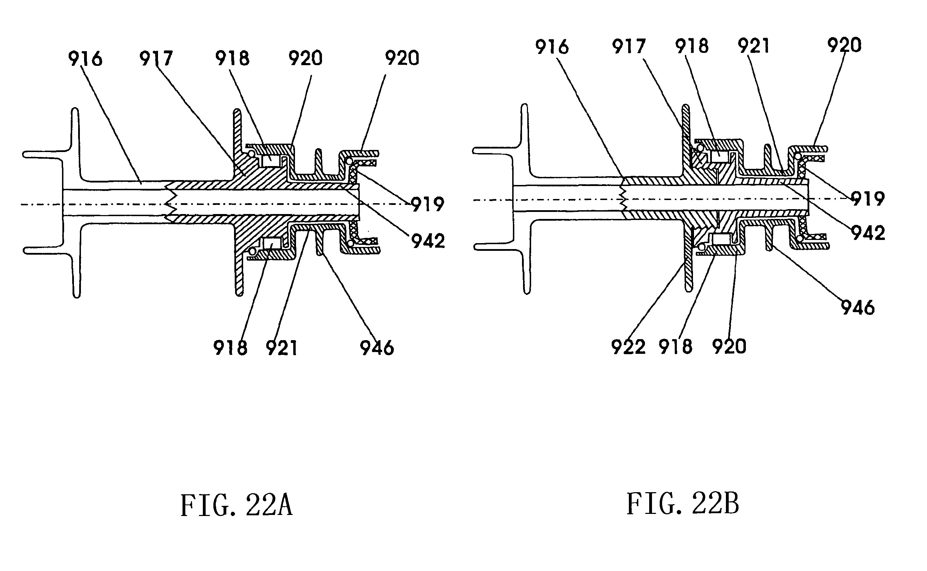

In order to meet the requirement that the front and rear drive transmission ratios of the fitness bicycle be the same and the diameter of the hand drive chainwheel 991 be small, the number of teeth of the front driving flywheel shall be as little as possible, the structure of the front axle flywheel having small amount of teeth is as below. As shown in Fig. 22A, an inner sleeve 917 of the flywheel is arranged on the periphery on the right side of the hub 916 of the front wheel 111, a pawl 918 is arranged on the inner sleeve 917, an elongated and thin wheel axle sleeve and an elongated sleeve 942 of the flywheel inner sleeve are arranged on the outer end of the inner sleeve 917. The outer end of the sleeve is provided with thread for connecting the end cover 919. Corresponding concave ball tracks are arranged on both the inner and outer sides of the end cover 919. A concave circular groove 921 that is outside the thin elongated sleeve is arranged on the flywheel casing 920, thus the diameter of the concave portion of the circular groove may be very small. A chainwheel 946 having a very few teeth may be arranged on the concave portion in small diameter.

The flywheel inner sleeve 917 and the wheel hub 916 may be designed separately. A connecting tube 922 with external thread may be arranged on the right side of the wheel hub 916, and internal thread for connecting with the connecting tube 922 is arranged on the left side of the inner sleeve 917. By connecting the internal thread with the external thread, the flywheel inner sleeve 917 and the whole flywheel can be removed from the wheel hub 916.

In order to make the exerciser to feel comfortable during a long time period of riding and to better control the bicycle, several saddle structures with low front and high back or the saddle structures that are convenient for achieving low front and high back are specifically arranged on the multi-functional fitness bicycle. The detailed structures of these saddles are as below.

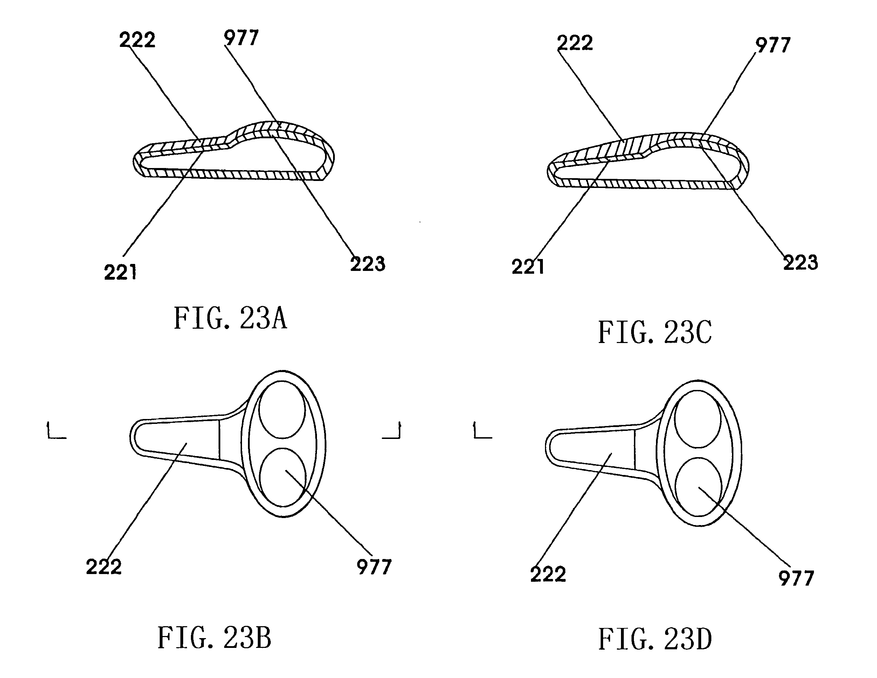

As shown in Figs. 23A to 23D, a saddle with low front and high back in a fixed structure may be directly adopted, a protruded frame 221 and an elastic and soft material 222 thereon at the front end of the saddle are respectively lower than a non-protruded frame 223 and an elastic and soft meterial 977 thereon; or a saddle in following structure may be adopted: the visual heights of the front protruded portion and the non-protruded portion of the soft materials are almost the same, but the protruded frame 221 is obviously lower than the non-protruded portion 223, merely the soft material 222 on the front protruded frame 221 is thicker than the soft material 977 on the rear non-protruded frame 223. By adopting the above-mentioned two structures of saddles, the crotch of the exerciser will not contact directly with the front protruded portion or will not press the front protruded portion with strong force, but merely the lower portion of the hip directly contact and press the non-protruded portion of the saddle with strong force (the average pressure may not be high). Hence, the protruded portion of the saddle and the whole saddle will not hurt the exerciser. On the other hand, when turning around or in other conditions, the exerciser can push the front protruded portion with his/her left or right inner thigh to help turning and better control the bicycle. Accordingly, the saddles can achieve objects of comfortable, high-speed and safe riding.

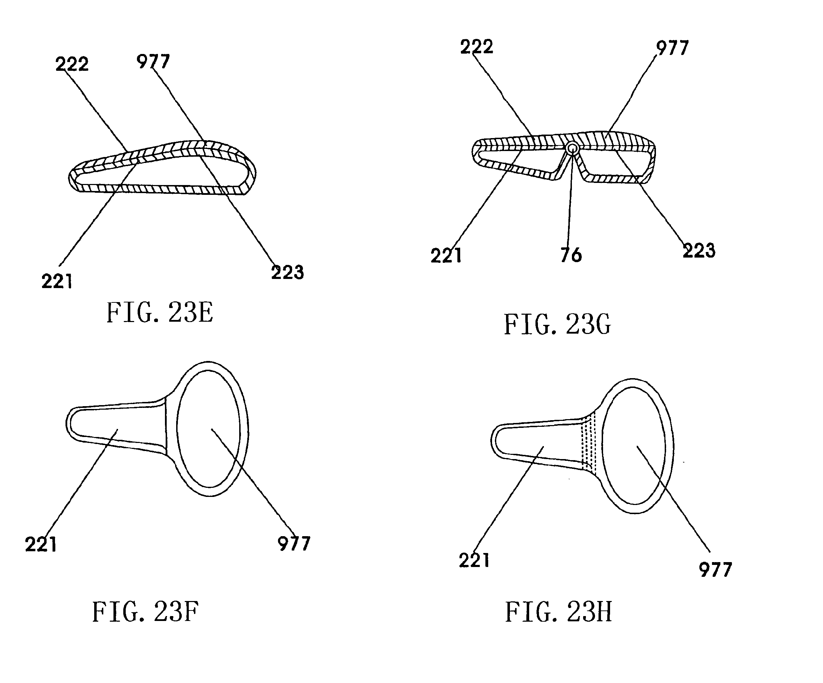

As shown in Figs. 23E and 23F, the structure of the saddle that can achieve the previously described functions may also be as below. Both the front protruded portion 221 and the soft material 222 thereon may be in a slope shape tilted at a certain angle from the back to the front. The saddle may also enable the exerciser to ride comfortably and safely.

As shown in Figs. 23G and 23H, combining the "slope-type" front protruded saddle with the ordinary "completely" horizontal saddle, the following structure and arrangement of the saddle may be adopted. The front protruded frame 221 and the soft material 222 thereon can swing, and can be positioned and locked horizontally or inclined downwardaround the axis of the intersection between the front protruded frame 221 and the non-protruded frame 223. The saddle in such a structure having the front protrusion swing downward according to the need has a wider selectivity and applicable scope.

In summary, the present invention provides a fitness bicycle with a plurality of driving modes that can be conveniently shifted, the fitness bicycle comprises left and right front drive rocker arms, left and right drive handles, left and right pedal cranks, pedals, front and rear wheels, front and rear drive chainwheels and a frame, wherein the front drive rocker arm system can be conveniently exchanged with various ordinary handles; the specifical pedal system can be conveniently shifted between the structure of driving around 360° and the structure of driving by merely pedaling; the fitness bicycle adopts a coupled axle flywheel having the number of teeth as little as possible; the fitness bicycle comprises an automatical resistance adjusting system; the whole bicycle can be conveniently shifted between the structure of a common bicycle and a structure achieving specific driving modes.

## Claims

1. A multi-functional fitness bicycle, comprising front and rear wheels, a saddle, a frame and hand-and-foot drive system; the hand-and-foot drive system includes at least one pedal, and a foot drive chainwheel, the foot drive chainwheel being coupled with the pedal via a pedal crank; the hand-and-foot drive system further comprises a front wheel drive system including a hand drive gear, which is driven by a rocker arm integrated with a front fork; the front driving rocker arm is pivoted to the front driving axle seat and drives the front wheel; **characterized in that** the bicycle further comprises an inertial energy storage wheel for adjusting resistance automatically and a variable-resistance control system, which automatically adjusts kinetic resistance of the inertial energy storage wheel when the bicycle is driven.

2. The bicycle according to claim 1, **characterized in that** the variable-resistance control system includes at least one centrifugal fly block arranged along the periphery of the inertial energy storage wheel and a damping belt around the inertial energy storage wheel and the centrifugal fly block; one end of the centrifugal fly block is pivoted to the inertial energy storage wheel, and the other end thereof is elastically supported, the ends of the centrifugal fly block extend to push the damping belt when the speed of the inertial energy storage wheel reaches a predetermined value, increasing resistance between the inertial energy storage wheel and the damping belt.

3. The bicycle according to claim 1, **characterized in that** the variable-resistance control system includes at least one T-shape fly block arranged along the periphery of the inertial energy storage wheel and a damping belt around the inertial energy storage wheel and the T-shape fly block; the T-shape fly block is placed in a groove formed in the periphery of the inertial energy storage wheel, the lower end of the T-shape fly block being placed in a radial hole of the groove and an elastic member being provided at the bottom thereof; a blocking member for preventing the T-shape fly block from falling off is arranged along the outer edge of the inertial energy storage wheel.

4. The bicycle according to claim 1, **characterized in that** the variable-resistance control system includes an eccentric wheel and an elliptical wheel that are coupled with the foot drive chainwheel, and a pull/push rod arranged on the frame, a magnetic damping plate being provided at the bottom of the pull/push rod and a roller being provided at the top thereof, which is in tangent contact with the eccentric wheel and the elliptical wheel; when the distal ends of the eccentric wheel and the elliptical wheel are in contact with the roller, the damping plate produces a maximum resistance to the inertial energy storage wheel.

5. The bicycle according to claim 1, **characterized in that** the variable-resistance control system further includes an eccentric wheel and an elliptical wheel that are coupled with the foot drive chainwheel, and a damping belt around the inertial energy storage wheel; a pull rod is arranged at the end of the damping belt, the eccentric wheel and the elliptical wheel push the pull rod to move the damping belt, generating a variable resistance to the inertial energy storage wheel.

6. The bicycle according to claim 4 or 5, **characterized in that** the variable-resistance control system further includes a driven chainwheel coupled with a driving chainwheel on the the foot drive middle axle, and an eccentric wheel coupled with the driven chainwheel; a derailleur is arranged between the driven chainwheel and the eccentric wheel, enabling the eccentric wheel to rotate at the same angular speed as that of the driven chainwheel, or enabling the eccentric wheel to rotate at an angular speed twice of that of the driven chainwheel.

7. The bicycle according to claim 1, **characterized in that** the variable-resistance control system includes a resistance adjusting wheel coupled with the foot drive chainwheel, and a damping belt around the inertial energy storage wheel having its one end fixed to periphery of the driven wheel via a draw wire; the periphery of the resistance adjusting wheel is arranged with a plurality of regulating holes at different distances from the center of the circle thereof, the draw wire being fixed to the regulating holes by a locking member.

8. The bicycle according to claim 7, **characterized in that** the variable-resistance control system further includes a driven chainwheel coupled with a driving chainwheel on the the foot drive middle axle, and a resistance adjusting wheel linked to the driven chainwheel; a derailleur is arranged between the driven chainwheel and the resistance adjusting wheel, the derailleur enabling the resistance adjusting wheel to rotate at the same angular speed as that of the driven chainwheel, or enabling the resistance adjusting wheel to rotate at an angular speed twice of that of the driven chainwheel.

9. The bicycle according to claim 2, 3, 4, 5 or 7, **characterized in that** the inertial energy storage wheel is arranged at an axle of the rear wheel and is or is not coaxial with the real wheel, or the inertial energy storage wheel is arranged at the foot drive middle axle with its rotating center coinciding with the axis of the foot drive middle axle.

10. The bicycle according to claim 9, **characterized in that** the inertial energy storage wheel for adjusting resistance automatically can be applicable to stationary fitness equipment such as a fitness car and the like.

11. The bicycle according to claim 1, **characterized in that** an elliptical chainwheel and an eccentric chainwheel are arranged on the foot drive middle axle, and the long axis of the elliptical chainwheel and the radial central line of the engaged pedal crank forms an angle of about 90°; and a straight line connecting the geometrical center of the eccentric chainwheel and the center of the foot drive middle axle on the plane of the chainwheel and the radial central line of the engaged pedal crank forms an angle of about 90°.

12. The bicycle according to claim 1, **characterized in that** a pedaling shifting structure is arranged on the foot drive middle axle for shifting between a parallel pedaling and an alternate pedaling, the pedaling shifting structure includes an inner racket sleeve fixed to one side of the foot drive middle axle and an outer racket sleeve fixed to the pedal crank, a notched portion is arranged on at least one side of the radial outer periphery of the inner racket sleeve, the ends of the notched portion are arranged as engaging shoulders, and at least one engaging arm is arranged on the outer racket sleeve on the same side; the engaging arm is engaged to the engaging shoulder so as to engage the inner racket sleeve with the outer racket sleeve to rotate together.

13. The bicycle according to claim 12, **characterized in that** the notched portion is arranged on each of the symmetrical two sides on the radial outer periphery of the inner ratchet sleeve, the two ends of each of the notched portion are arranged as engaging shoulders, and two engaging arms are arranged correspondingly, the two engaging arms are engaged to the engaging shoulders on the two sides of the notched portion respectively/simultaneously.

14. The bicycle according to claim 12 or 13, **characterized in that** a engaging push wheel is arranged for engaging with the engaging arms, the engaging push wheel being arranged in the outer ratchet sleeve, the lower side of the engaging push wheel forming an arcurate pushing surface in equal radius, a first pushing surface being formed extending from two sides of the arcurate pushing surface in an upside down "□" shape and enabling the engaging arm to push the engaging shoulder, and a second pushing surface being formed above the first pushing surface and being capable of pushing the engaging arm away from the engaging shoulder.

15. The bicycle according to claim 12, **characterized in that** an elastic member is arranged on the outer sleeve of the pedaling shifting structure for pushing the engaging arm toward the engaging push wheel.

16. The bicycle according to claim 1, **characterized in that** a pedaling shifting structure is arranged on the foot drive middle axle of the bicycle for shifting between a parallel pedaling and an alternate pedaling, the pedaling shifting structure includes an inner sleeve fixed to the foot drive middle axle and an outer sleeve fixed to the pedal crank, two notches are arranged symmetrically in the outer sleeve, and correspondingly, a tongue is arranged on the inner sleeve, when the pedal crank and the outer sleeve connected thereto are driven to rotate, the tongue is engaged to the notches to rotate the inner sleeve, the middle axle, the outer sleeve and the crank synchronously, and fix the left and right pedals in parallel or alternately at 180°.

17. The bicycle according to claim 16, **characterized in that** out of the two symmetrical notches in the outer sleeve, a plurality of notches are arranged on the two sides of the notch that can fix the left and right pedals in parallel, such that the pedal cranks can be set nearly in parallel by means of these notches.

18. The bicycle according to claim 16, **characterized in that** a fixing hole is arranged in the pedal crank, which is fixed to the foot drive chainwheel via a bolt and the hole.

19. The bicycle according to claim 1, **characterized in that** a pedal upper sleeve can rotate around a pedal shaft; and a threaded rod is arranged under the pedal upper sleeve, the threaded rod is screwed into a pedal sleeve at the lower portion of the pedal and adjusts and fixes the distance between the pedal and the pedal upper sleeve by a bolt hole in the pedal sleeve.

20. The bicycle according to claim 19, **characterized in that** a sleeve extension portion that can be mounted removably is arranged on the pedal upper sleeve, the sleeve extension portion is above the pedal.

21. The bicycle according to claim 20, **characterized in that** the bicycle further comprises a special shoe including a shoe face and a shoe bottom, the shoe face being provided with a concave engaged with the extension portion of the pedal upper sleeve for limiting the extension portion from moving forward and backward.

22. The bicycle according to claim 21, **characterized in that** the concave is arranged on an independent block, a releasable fastening structure is arranged at the bottom of the independent block, and a corresponding releasable fastening structure is arranged on the shoe face.

23. The bicycle according to claim 22, **characterized in that** the releasable fastening structure is comprised of press buttons.

24. The bicycle according to claim 23, **characterized in that** a fixing string is arranged on the independent block, and at least two fixing hooks are arranged on the shoe face, the independent block is fixed onto the shoe face by pulling the fixing string through the fixing hooks.

25. The bicycle according to claim 19 or 20, **characterized in that** a groove or a pushing surface is arranged in the threaded rod, holes are arranged in the pedal sleeve, and a engaging member can extends into the groove or pushing surface to prevent the pedal from rotating around the threaded rod.

26. The bicycle according to claim 25, **characterized in that** the engaging member is an eccentric wheel connected to a handle, the rotating shaft of the eccentric wheel is fixed with the pedal sleeve.

27. The bicycle according to claim 1, **characterized in that** the pedal comprises a hooking pin pivoted to the pedal shaft, at least one connecting bar is fixed to the two symmetrically arranged pedal blocks at the inner side of the hooking pin, the portion of the hooking pin other than the inner side thereof where the hooking pin connects with the connecting bar does not include any other connecting members and is spaced apart from any other members.

28. The bicycle according to claim 27, **characterized in that** the pedal can be matched with a shoe bottom, the shoe bottom contains a connecting member having a hooking pin hole engaged with the hooking pin member, the connecting member is pivoted or fixed to the shoe bottom, and a limiting structure for limiting the rotating and swinging angle of the pivoted connecting member.

29. The bicycle according to claim 28, **characterized in that** the connecting member is arranged in a concave in the shoe bottom, and the height of the connecting member does not exceed beyond the plane of the shoe bottom.

30. The bicycle according to claim 29, **characterized in that** an elastic member is arranged in the hooking pin hole of the connecting member to enable the hooking pin hole to forcibly hold the hooking pin.

31. The bicycle according to claim 30, **characterized in that** at least one surface of the hooking pin is aligned with the stepping surface of the two pedal blocks.

32. The bicycle according to claim 1, **characterized in that** the bicycle further comprises a front damping system, the front damping system is arranged between the front wheel axle and the frame and includes an upper pivot tube and a lower pivot tube, the upper pivot tube is pivoted with the end of the lower pivot tube, a hand drive chainwheel is arranged coaxially on the pivot axle; meanwhile, a spring lever is arranged between the upper pivot tube and the lower pivot tube.

33. The bicycle according to claim 1, **characterized in that** the frame is provided with at least one fixing hole for adjusting the height of the foot drive middle axle, and a first regulating rod having its lower end hinged to the foot drive middle axle seat, a plurality of first regulating holes matched with the fixing hole are arranged on the first regulating rod for fixing and adjusting the height of the foot drive middle axle seat.

34. The bicycle according to claim 33, **characterized in that** the foot drive middle axle seat is further coupled with a second regulating rod having its one end fixed to the foot drive middle axle seat and the other end pivoted to the front or rear end of the frame.

35. The bicycle according to claim 34, **characterized in that** two first regulating rods may be hinged to the foot drive middle axle seat, a plurality of first regulating holes are arranged in the other end of each first regulating rod, and a plurality of fixing holes are arranged in the frame, the first regulating holes are fixed respectively to the fixing holes for fixing and adjusting the height of the foot drive middle axle seat.

36. The bicycle according to claim 1, **characterized in that** a first engaging tube is arranged under the frame central upright tube, a second engaging tube is arranged on the foot drive middle axle seat, which can be inserted into the first engaging tube and can move upward and downward to be locked at different heights of the first engaging tube.

37. The bicycle according to claim 1, **characterized in that** a hand drive rocker arm provided with a hand drive chainwheel is pivoted to the front driving axle seat on the front fork, and front and rear brake devices are arranged on the front drive axle seat, the brake handles thereof exceed beyond the hand drive chainwheel for the convenience of being held.

38. The bicycle according to claim 37, **characterized in that** the front drive axle seat is coupled with the upper end of the front fork via a regulating mechanism, the regulating mechanism includes an inner sleeve and an outer sleeve, regulating holes are arranged in the outer sleeve, and a locking groove is arranged in the inner sleeve, the engaged depth of the inner sleeve and outer sleeve is adjusted and fixed by a bolt.

39. The bicycle according to claim 38, **characterized in that** the front drive axle seat is fixed to the outer sleeve, the inner sleeve is positioned above the front fork and is screwed into the outer sleeve.

40. The bicycle according to claim 39, **characterized in that** a slide-proof groove and a slide-proof plate are arranged on the inner sleeve, the slide-proof plate has its one end pivoted to the outer sleeve and the other end formed with fixing holes and can be fixed to the outer sleeve, the edge of the slide-proof plate passes through an opening on the outer sleeve, the slide-proof plate can be imbedded into the slide-proof groove to avoid relative slide between the front drive axle seat and the front fork; a small hole for assembly and disassembly is formed adjacent to the outer side of the slide-proof plate.

41. The bicycle according to claim 37, **characterized in that** a variable-speed control device is arranged in front of the front drive axle seat, the variable-speed control device comprises a first control handle for shifting positions by hooking with fingers and a second control handle for shifting positions by pushing with fingers' back, the length and shape of the first and second control handles shall be configured such that they can move around the front drive chainwheel for the convenience of hooking and pushing with fingers, the whole variable-speed control device is integrated with the brake handles.

42. The bicycle according to claim 37, **characterized in that** the front and rear brake device further comprises brake handles arranged on the drive handle on the front drive rocker arm, one end of the brake handle is fixed to the drive handle, and its central portion can be pressed on the driving disc coaxially coupled with the shaft of the drive handle, a first reset elastic member is arranged on the side of the driving disc, a draw wire is connected to a driven disc in the middle of the hand drive rocker arms, a second reset elastic member is arranged on the side of the driven disc, the driven disc is displaced via the draw wire; the middle of a forcipate brake arm is pivoted to the front drive axle seat, the forcipate brake arm is comprised of an outer push arm and an inner pull arm, the outer push arm and the inner pull arm are arranged across the driven disc, the periphery of the driven disc may contact with the outer push arm of the forcipate brake arm, the inner pull arm is brought to rotate by pushing the outer push arm so as to move the brake wire connected with the inner pull arm.

43. The bicycle according to claim 42, **characterized in that** a linkage brake device is arranged on the front drive axle seat, a protrusion is arranged on the brake handle of the linkage brake device, the protrusion can be pressed on the inner pull arm of the forcipate brake arm to rotate the forcipate brake arm.

44. The bicycle according to claim 1, **characterized in that** the shafts of the hand drive handles can be coupled with the front drive rocker arms via adjustable tubes fixed thereto, the adjustable tubes can be shifted between two angular positions differing 180° along the circumferential direction and are fastened to the ends of the front drive rocker arms, and allows the shafts of the hand drive handles to be in parallel, a locking hole and a locking member may be arranged on the adjustable tube.

45. The bicycle according to claim 44, **characterized in that** two rows of longitudinally distributed locking holes are formed symmetrically at 180° on the adjustable tube, each of the locking holes can be engaged with the clip pin on the hand drive rocker arm, a push elastic member is arranged inside the clip pin, at least two locking holes that are symmetrically distributed at 180° may be arranged on the adjustable tube.

46. The bicycle according to claim 1, **characterized in that** the front wheel driving system further comprises an axle transmission structure including a transmission axle arranged inside the sleeve between the hand drive gear and the front wheel axle, the two ends of the transmission axle are provided with a first and a second conical gears, the first conical gear is engaged with a third conical gear arranged on the hand drive rocker arm axle, the third conical gear can integrated with the hand drive gear, the second conical gear is engaged with a fourth conical gear on the front wheel axle, the transmission axle may includes an upper axle tube and a lower axle tube that are axially engaged by insertation and can only move relatively along the axial direction.

47. The bicycle according to claim 46, **characterized in that** the third conical gear, the first conical gear and the upper axle tube of the transmission axle can be pivoted respectively to the fixing seat of the front drive axle and an adjusting and connecting sleeve fixed to the fixing seat of the front drive axle, the fixing seat of the front drive axle and the adjusting and connecting sleeve can bring the first and third conical gears and the upper axle tube of the transmission axle to move up and down within a certain height, the adjusting and connecting sleeve can be locked to positions at different heights above the sleeve between the hand drive gear and the front wheel axle.

48. The bicycle according to claim 46, **characterized in that** the axle transmission structure for the front wheel drive can be arranged independently on the side of the existing front wheel damping system.

49. The bicycle according to claim 46, **characterized in that** the axle transmission structure and the damping structure can be arranged as a combined structure, the combined structure is configured such that the transmission axle also includes an upper axle tube and a lower axle tube, the upper axle tube and the lower axle tube are engaged axially by insertation and can only move relatively along the axial direction, the sleeve between the hand drive rocker arm axle and the front wheel axle includes an upper outer sleeve and a lower outer sleeve, the upper axle tube of the transmission axle is pivoted to the upper outer sleeve between the hand drive rocker arm axle and the front wheel axle, the lower axle tube of the transmission axle is pivoted to the lower outer sleeve between the hand drive rocker arm axle and the front wheel axle, and an elastic member like a damping spring is arranged within each of the upper axle tube and the lower axle tube of the transmission axle and the upper outer sleeve and the lower outer sleeve between the hand drive rocker arm axle and the front wheel axle.

50. The bicycle according to claim 49, **characterized in that** a piston is arranged under the upper axle tube of the transmission axle, and a piston tube or a hydraulic cylinder is arranged in the lower axle tube of the transmission axle.

51. The bicycle according to claim 49, **characterized in that** the combined structure may be configured such that the damping structure is merely arranged in the sleeve on one side, and an axle transmission structure is arranged in the sleeve on the other side instead of the damping structure.

52. The bicycle according to claim 1, **characterized in that** the bicycle is placed on a stationary frame, the frame comprises a bottom frame, a transmission member linking the front and rear wheels, a rear wheel support portion for supporting and fixing the rear wheel axle of the bicycle, and at least a first and a second transmission wheels that contact respectively with the front and rear wheels, the pivots of the first and second transmission wheels are fixed to the bottom frame and are coupled with the transmission member.

53. The bicycle according to claim 52, **characterized in that** the distance between the first and second transmission wheels can be adjusted, the adjusting structure includes a front and a rear sleeves that are engaged by insertation, and securing members on the sleeves for fixing the front and rear sleeves.

54. The bicycle according to claim 1, **characterized in that** the bicycle may be placed on a stationaryframe, the frame comprises a bottom board, a transmission structure moving around the bottom board, a front wheel limiting bracket for limiting the rotating and swinging of the front wheel of the bicycle, and a rear wheel support bracket for fixing the rear wheel axle of the bicycle, the transmission structure is contacted with and linked to the front and rear wheels.

55. The bicycle according to claim 54, **characterized in that** the front wheel limiting bracket and the rear wheel support bracket can be conveniently folded and removed, the transmission structure moving around the bottom board can be a transmission belt that allows the exerciser to run on it, the stationary frame further comprises handrails for doing running exercises.

56. The bicycle according to claim 1, **characterized in that** a flywheel installation section having a little diameter is arranged on the extension of the front wheel hub, a front wheel flywheel with small amount of teeth is fixed onto the flywheel installation section, a concave is formed on the front wheel flywheel in its axial cross-section, the teeth of the flywheel are arranged in the concave, a engaging structure and slide accessories of the flywheel are arranged on the side of the concave.

57. The bicycle according to claim 56, **characterized in that** the inner sleeve of the flywheel is integrated with the front wheel hub.

58. The bicycle according to claim 1, **characterized in that** the saddle comprises a frame inside and a soft material on its surface, the rear main part of the frame is higher than the front protruded part of the frame.

59. The bicycle according to claim 1, **characterized in that** the saddle comprises a frame inside and a soft material on its surface, the frame of the saddle is divided into two parts that are pivoted via a pivot.
